# EUROPÄISCHE PATENTSCHRIFT

(11) **EP 3 593 421 B1**
(45) Veröffentlichungstag und Bekanntmachung des Hinweises auf die Patenterteilung: **10.05.2023**
(21) Anmeldenummer: 18709526.0
(22) Anmeldetag: 02.03.2018
(51) Int. Cl.: H01S 3/00, B23K 26/06, B23K 26/067, G02B 27/48

(54) **VERFAHREN UND VORRICHTUNG ZUR FORMUNG VON STRAHLUNG FÜR DIE LASERBEARBEITUNG**
METHOD AND DEVICE FOR SHAPING RADIATION FOR LASER PROCESSING
PROCÉDÉ ET DISPOSITIF DE FORMATION DE RAYONNEMENT POUR TRAITEMENT AU LASER

(30) Priorität: 07.03.2017 DE 102017203655
(43) Veröffentlichungstag der Anmeldung: 15.01.2020
(73) Patentinhaber: Robert Bosch GmbH, 70442 Stuttgart (DE)
(72) Erfinder: MIKHAYLOV, Dmitriy, 71272 Renningen (DE); GAUCH, Roland, 71272 Renningen (DE); GRAF, Tobias, 70469 Stuttgart (DE)
(86) Internationale Anmeldenummer: PCT/EP2018/055206
(87) Internationale Veröffentlichungsnummer: WO 2018/162356

(56) Entgegenhaltungen:
- WO-A1-00/67945
- WO-A1-2005/050286
- DE-A1-102007 029 621
- DE-A1-102010 052 950
- US-A1- 2005 185 683

## Beschreibung

### Stand der Technik

Die Erfindung betrifft ein Verfahren zur Strahlformung bei einem Laserbearbeitungsprozess, bei dem in einer Laseranordnung ein Laserstrahl auf eine Bearbeitungs-/ Abbildungsebene fokussiert und der Laserstrahl mittels mindestens eines Strahlformers hinsichtlich seiner Intensitätsverteilung angepasst werden kann.

Die Erfindung betrifft weiterhin eine Vorrichtung, insbesondere eine Laseranordnung mit einer Rechnereinheit zur Durchführung des erfindungsgemäßen Verfahrens.

In der Lasermaterialbearbeitung (Laserabtragen, -schweißen, -löten, -reinigen, -bohren, -sintern, -schmelzen usw.) wird in den meisten Fällen mit fokussierten Laserstrahlen gearbeitet, die eine gaußförmige Intensitätsverteilung aufweisen. Für viele dieser Prozesse ist es aber von großem Vorteil, die Intensitätsverteilung in der Bearbeitungsebene an den Prozess anzupassen. Die Strahlformung in der Bearbeitungsebene bietet dabei enormes Optimierungspotenzial für die Laserprozessentwicklung.

Um einen Laserstrahl in seiner Intensitätsverteilung formen zu können, müssen entweder seine Phase, seine Amplitude oder beides zusammen moduliert werden. Entsprechend gibt es Phasenmodulatoren, Amplitudenmodulatoren oder Phasen- und Amplitudenmodulatoren. Der große Nachteil der Amplitudenmodulatoren (z.B. DMD-Mikrospiegel-Arrays) besteht darin, dass bei deren Einsatz für die Strahlformung zumeist ein Teil der Laserstrahlung des Ursprungsstrahls ausgeblendet wird, womit die Energieeffizienz des Gesamtsystems sinkt. Der Vorteil der Phasenmodulatoren besteht darin, dass diese die Amplitude des Ursprungsstrahls nicht beeinflussen und somit die (nahezu) gesamte Energie für den Laserbearbeitungsprozess benutzt werden kann. Die Phasenmodulatoren basieren wiederum auf zwei unterschiedlichen Prinzipien - dem Prinzip der Brechung (Refraktion) und dem Prinzip der Beugung (Diffraktion). Entsprechend gibt es refraktive und diffraktive Strahlformer. Die ersteren sind in ihrer Möglichkeit der Strahlformung recht eingeschränkt: Hauptsächlich können nur einfache und meistens auch achsen-symmetrische Strahlformen erzeugt werden, wie sogenannte Top Hat Beams, Besselstrahlen, Airy-Beams, Donuts usw. Komplizierte Geometrien, insbesondere solche, die keine Rotations- oder Rechtecksymmetrien aufweisen, erfordern den Einsatz von Freiformflächen. Entsprechende Design- und Fertigungsmethoden werden bereits entwickelt, sind aber noch nicht industrieller Standard. Die diffraktiven Strahlformer bieten dagegen viel mehr Möglichkeiten zur Strahlformung und Strahlteilung, da die entsprechenden mikrooptischen Strukturen z.B. mit lithografischen Verfahren, Spritzguss oder Prägen hergestellt und mittels etablierten Phase-Retrieval-Algorithmen berechnet werden können. Des Weiteren sind zunehmend schaltbare Strahlformer, z.B. basierend auf Flüssigkristalltechnologie oder Mikrospiegel-Arrays am Markt verfügbar.

Bei diffraktiven Strahlformern handelt es sich zumeist um 1D- oder 2D-Array Strukturen, die dem einfallenden (ungeformten) Laserstrahl eine diskretisierte Phasenverzögerung (Phasenverteilung) aufprägen. Durch die Veränderung der Phasenverteilung des einfallenden Laserstrahls wird seine Intensitätsverteilung in der Fourierebene (Fokusebene) ebenfalls verändert! moduliert. Die bekannten diffraktiven Strahlformer sind z.B. die so genannten diffraktiven optischen Elemente (DOE), die aus Glas oder Kunststoff aufgebaut sind und eine feste, nicht veränderbare Beugungsstruktur eingearbeitet haben. Weiter bekannt sind auch flexible/ programmierbare Strahlformer wie z.B. Spatial Light Modulatoren (SLM), bevorzugt Phasenmodulatoren auf Flüssigkristall Basis mit doppelbrechenden Flüssigkristallen.

Die in einem DOE eingearbeitete oder am SLM einprogrammierte Beugungsstruktur wird Phasenmaske genannt. Zur Auslegung dieser Phasenmasken werden unterschiedliche Algorithmen verwendet, die je nach Anforderung an eine Strahlform ausgewählt werden. Weit verbreitet ist ein so genannter diffraktiver Diffusor-Algorithmus, basierend auf dem Iterativen Fourier-Transformations-Algorithmus (IFTA). Die Aufgabe dieses Algorithmus besteht darin, aus dem einfallenden ungeformten Strahl durch die Aufprägung der Phasenmaske eine Menge an Beugungsordnungen zu erzeugen, die in der Bearbeitungsebene das gewünschte Strahlprofil bzw. die gewünschte Intensitätsverteilung ergeben. Dabei kann der diffraktive Diffusor Algorithmus (ferner IFTA) für die Strahlteilung und für die Strahlformung verwendet werden. Von der Strahlteilung spricht man, wenn die einzelnen erzeugten Beugungsordnungen in ausreichendem Abstand voneinander liegen und sich quasi nicht überlappen. Von der Strahlformung wird gesprochen, wenn die einzelnen Beugungsordnungen so nah beieinanderliegen und durch ihre örtliche Überlagerung ein gewünschtes Strahlprofil ergeben, der als eine flächige Intensitätsverteilung ausgeprägt ist.

Die mit Hilfe des IFTA erzeugten Phasenmasken bieten mehrere Vorteile gegenüber anderen Algorithmen und werden deswegen in der Lasermaterialbearbeitung bevorzugt eingesetzt. Der diffraktive Diffusor Algorithmus IFTA:
- bietet sehr hohe Effizienz der Energieausnutzung der Laserstrahlung (wenig Streustrahlung)
- erzeugt Phasenmasken, die geringe Justageanfälligkeit gegenüber Laserstrahllage auf dem Strahlformer aufweisen
- setzt ein gewünschtes Strahlprofil aus einzelnen Beugungsordnungen des Eingangs-strahls zusammen, womit die Schärfentiefe der erzeugten Strahlprofile dieselbe ist wie die eines nicht geformten fokussierten Eingangsstrahls
- ist relativ einfach umzusetzen (mathematisch gesehen)
- ist ein schneller Algorithmus (rechenzeittechnisch gesehen)

Vor allem bei der Verwendung des diffraktiven Diffusors als Strahlteiler, wo jede Beugungsordnung eine Abbildung des Eingangsstrahls darstellt, bietet dieser Algorithmus eine hohe Präzision bei der Einstellung der Position und der jeweiligen Punktleistung: Derzeit können Strahlteiler-Phasenmasken erzeugt werden, bei denen die Variation der Leistung in den einzelnen Beugungsordnungen in der Bearbeitungsebene im Bereich ± 0,5% liegen.

Aufgrund der aufgezählten Vorteile werden Phasenmasken für DOE und SLM oft mit dem beschriebenen IFTA berechnet, wenn es um die Strahlteilung geht. Bei der Strahlformung weist dieser Algorithmus einen signifikanten Nachteil auf: Die einzelnen Beugungsordnungen liegen so nah beieinander, dass es in bestimmten Fällen (z.B. bei Phasensprüngen in den benachbarten Beugungsordnungen) zu ungewünschten Interferenzen zwischen diesen benachbarten Beugungsordnungen kommt. Aufgrund von wechselnder konstruktiver und dekonstruktiver Interferenz kommt es daher zu einem Kontrastverhältnis von bis zu 100%. Diese Interferenzerscheinungen oder auch Specklemuster stören bei der Laserbearbeitung. Bei der Strahlformung mittels des diffraktiven Diffusor Algorithmus IFTA gibt es also einen großen Nachteil, den es zu beheben gilt, um die vielen Vorteile dieses Algorithmus nutzen zu können.

Die US 6,717,104 B2 beschreibt beispielsweise ein System zur Materialbearbeitung mittels Laserstrahlung bestehend aus einer Laserquelle, die einen Laserstrahl erzeugt, der zu einem Werkstück geleitet wird, einem Spatial Light Modulator SLM, der einzeln ansteuerbare Elemente zur Beeinflussung des Phasenprofils des Laserstrahls aufweist, um auf dem Werkstück eine zugehörige Intensitätsverteilung zu erzeugen, eine mit dem SLM verbundene Steuereinheit, um deren einzeln ansteuerbare Elemente anzusteuern, so dass das Phasenprofil des Laserstrahls derart eingestellt werden kann, dass ein gewünschtes Intensitätsprofil auf dem Werkstück erzielt wird, das für die beabsichtigte Materialbearbeitung geeignet ist. Weiterhin sind vor dem SLM und auf das Werkstück Sensoren gerichtet, die die Intensitätsverteilung erfassen und Daten an die Steuereinheit senden, auf deren Basis Abweichungen in der Phasenverteilung korrigiert werden.

Aus der EP 000000540759 A1 ist ein optisches Gerät zur Erzeugung von Mustern im Raum bekannt, welches zumindest eine kohärente Lichtquelle, einen flächigen Lichtmodulator (Spatial Light Modulator SLM) zur Formung der Wellenfront des Lichts der kohärenten Lichtquelle und eine Vorrichtung zur Aufnahme der komplexen Amplitudenverteilung auf dem Lichtmodulator aufweist. Das optische Gerät ist zum Aufbringen von (strukturierten) Mustern auf einen Gegenstand geeignet. U.a. wird eine Mehrfachbelichtung des zu strukturierenden Gegenstands beschrieben, bei der dem Lichtmodulator zeitlich nacheinander unterschiedliche Datensätze zugeführt werden, die zu demselben Muster auf dem zu strukturierenden Gegenstand führen. Hierdurch werden die Specklemuster auf dem Gegenstand gemittelt.

Die WO 00206104704 A1 beschreibt eine Apparatur zur Verminderung von Specklemustern in einem Laser-Projektor, der einen Spatial Light Modulator (SLM) mit vorgegebener Pixelrate verwendet. In der Apparatur wird ein Laserstrahl durch einen Strahlteiler in zwei Strahlen aufgeteilt, wobei der erste Strahl durch eine erste Halbwellenplatte zu einem s-polarisierten Strahl geformt wird und der zweite Strahl durch eine zweite Halbwellenplatte zu einem p-polarisierten Strahl geformt wird. Die Strahlen werden nach dem SLM zusammengeführt um die Specklemuster zu vermindern. Die in dieser Schrift beschriebene Anordnung betrifft einen Laserprojektor zur Wiedergabe von Bildern auf einem Projektionsschirm und betrifft daher das Auftreten so genannter subjektiver Speckles.

Die US 6,577,429 B1 beschreibt eine Anzeigevorrichtung mit verminderter Specklemusterbildung, z.B. als ein Projektionsgerät, bestehend im Wesentlichen aus einem gepulsten Laser, einer Strahlteileranordnung zur Erzeugung von jeweils zueinander zeitverzögerter Teillaserstrahlen, wobei die Zeitverzögerung größer oder gleich der Kohärenzlänge des Lasers ist, einem Diffusor, der die Kohärenz der Teillaserstrahlen vermindert, einem Wabenintegrator, der die Beleuchtungsgleichmäßigkeit verbessert und die Specklemusterbildung weiter vermindert sowie einem Flächenlichtmodulator und einer Projektionslinse zur Bilddarstellung.

Insbesondere bei der Lasermaterialbearbeitung können sich objektive Specklemuster, d.h. Speckles, die sich direkt in der Bearbeitungsebene auf der zu bearbeitenden Materialoberfläche bilden, negativ auf die Bearbeitungsqualität, z.B. beim Laserschweißen, Abtragen, Löten usw., auswirken. In noch nicht veröffentlichten Parallel-Anmeldungen der Anmelderin sind unterschiedliche Ansätze beschrieben, wie die Strahlqualität verbessert werden kann. So werden u.a. in diesen Anmeldungen auch Ansätze beschrieben, wie die eingangs beschriebenen störenden Specklemuster kompensiert werden können.

Aus der Offenlegungsschrift WO2005/050286 A1 ist es bekannt, bei einer Anordnung zur Materialbearbeitung einen Laserstrahl in zwei Teilstrahlen aufzuteilen und vor einer erneuten Zusammenführung einer der Teilstrahlen eine Phasenverschiebung erfährt.

Die Offenlegungsschrift WO0067945 offenbart eine Laserbohrvorrichtung zum Abtrag von Materialien, wobei zumindest zwei Typen von Laserpulsen mit mindestens einer kürzeren Laserwellenlänge und mit mindestens einer längeren Laserwellenlänge erzeugt werden, wobei bei Typen von Laserpulsen gleichzeitig überlagert zugeführt werden.

In der Offenlegungsschrift DE102010052950 A1 ist eine optische Verstärkeranordnung gezeigt. Hierbei wird eine gepulste Laserstrahlung auf mehrere Verstärkerkanäle aufgeteilt, wobei jeder Verstärkerkanal mindestens einen Verstärker aufweist. Hierbei kann die optische Weglänge pro Verstärkerkanal so eingestellt werden, dass die optischen Weglängen zwischen den Kanälen dann mit einer definierten Phasenbeziehung für eine Zusammenführung der dort geführten Laserteilstrahlen ausgeglichen werden.

Ferner zeigt die Offenlegungsschrift DE102007029621 A1 eine Vorrichtung zur Stabilisierung eines Laserstrahles. Hierbei wird ebenfalls ein Laserstrahl in zwei Teilstrahlen aufgeteilt. Zumindest einer der Laserteilstrahlen wird vor einer Zusammenführung in seiner Polarisation gedreht.

Die Aufgabe der Erfindung besteht darin, die Entstehung von ungewünschten Interferenzen zwischen den einzelnen benachbarten Beugungsordnungen in dem mit Hilfe des diffraktiven Diffusor Algorithmus erzeugten/ geformten Strahlprofils zu unterdrücken, um die Bearbeitungsqualität mit beliebiger kohärenter und geformter Strahlung zu steigern.

Es ist weiterhin Aufgabe der Erfindung, eine entsprechende Vorrichtung, insbesondere eine Laseranordnung mit einer Rechnereinheit zur Durchführung des Verfahrens bereitzustellen.

### Offenbarung der Erfindung

Die das Verfahren betreffende Aufgabe wird durch die Merkmale der Ansprüche 1 bis 13 gelöst.

Erfindungsgemäß ist dabei vorgesehen, dass der Laserstrahl zur Vermeidung von Uniformitätsfehlern in der Bearbeitungs-/ Abbildungsebene mittels mindestens eines Strahlteilers in mindestens zwei Teil- oder Einzelstrahlen aufgeteilt wird und die Teil-oder Einzelstrahlen derart unterschiedlich beeinflusst werden oder jeder Teil- oder Einzelstrahl aus einer Laserquelle mit unterschiedlicher Wellenlänge gebildet wird, dass diese nach deren Zusammenführung und Fokussierung auf die Bearbeitungs-/ Abbildungsebene einen Ausgangsstrahl mit einem Intensitätsprofil bilden, wobei benachbarte Intensitätsmaxima des Intensitätsprofils des Ausgangsstrahles sich zum Ausschluss von Interferenzbildungen in zumindest einer oder mehreren Lichteigenschaften unterscheiden. Demnach sind jene Eigenschaften des Lichts gemeint, bei welchen bei der Zusammenführung von mindestens zwei Lichtstrahlen mit zumindest einem gleichen physikalisch auszumachenden Lichtmerkmal die Kriterien für die Ausbildung von Interferenzen vorliegen. Die benachbarten Intensitätsmaxima sind dabei jeweils einem Teil- oder Einzelstrahl zugeordnet. Ein jeweiliges Intensitätsmaximum liegt dabei infolge eines eingestellten Strahlprofils des Teil- oder Einzelstrahls vor. Zusätzlich werden die Intensitätsprofile der Teil- oder Einzelstrahlen (bzw. Sub-Teilstrahlen) in der Bearbeitungs-/ Abbildungsebene als regelmäßige Muster mit wiederkehrenden Musterfeldern zusammengeführt. So können die einzelnen Musterfelder gesamtheitlich zu einfachen Geometrieformen angeordnet werden, so dass das regelmäßige Muster beispielsweise dann als ein Schachbrettmuster, als ein Wabenmuster, als ein Dreiecks- oder Rautenmuster oder als ein anderes Regelmuster vorliegt. Das Intensitätsprofil des Ausgangsstrahles wird demnach gebildet aus benachbarten Musterfeldern, die durch ein jeweiliges Intensitätsprofil eines Teil- oder Einzelstrahles gebildet werden. Dabei werden direkt benachbarte Musterfelder wiederrum gebildet durch Teil- oder Einzelstrahlen, die sich in zumindest einer oder in mehreren der zuvor genannten Lichteigenschaften unterscheiden. Vorteilhaft können somit ungewünschte Interferenzen trotz der kohärenten Laserstrahlung zwischen den benachbarten Beugungsordnungen verhindert werden, was die Strahlqualität in der Bearbeitungs-/ Abbildunasebene erheblich steigert und damit die Laserbearbeitungsprozesse zu verbessern hilft. Die u.a. eingangs erwähnten Specklemuster können damit vermieden werden. Ferner zeigen sich Vorteile hinsichtlich einer rechnerbasierten Generierung von Phasen- und/ oder Amplitudenmasken.

Bevorzugt sind hierbei zumindest mehrere Teilstrahlen zumindest eines ersten Typs (z.B. Typ A) in einer ersten Matrixanordnung zueinander beabstandet und zumindest mehrere Teilstrahlen zumindest eines zweiten Typs (beispielsweise Typ B) in einer zweiten Matrixanordnung zueinander beabstandet, , wobei die zumindest erste und zweite Matrixanordnung von Teilstrahlen in der Bearbeitungs-/ Abbildungsebene unter Ausbildung des regelmäßigen Musters derart verschachtelt zueinander angeordnet werden, dass direkt benachbarte Musterfelder einem jeweils unterschiedlichen Typ von Teilstrahlen zugeordnet ist (beispielsweise liegt das regelmäßige Muster als ABABA usw. Anordnung der Teilstrahltypen vor). Bei mehr als zwei Typen von Teilstrahlen können sich deren Zuordnungen zu ausgebildeten Musterfeldern des regelmäßigen Musters in der Bearbeitungs-/ Abbildungsebene in jeweils gleicher Abfolge wiederholen (bei drei Typen von Teilstrahlen liegt beispielsweise das regelmäßige Muster als eine ABCABCABC usw. Anordnung der Teilstrahltypen vor). Die Wiederholung kann sich aber auch bei bestimmten Anwendungen nach einem anderen Wiederholschema orientieren, beispielsweise mit Ausbildung eines Musters als ABCABABABCABABABC usw. Anordnung der Teilstrahltypen. Die einzelnen Teilstrahlen innerhalb einer Matrixanordnung eines jeweiligen Typs sind in bevorzugten Ausführungen mindestens so weit voneinander beabstandet, dass zwischen diesen Teilstrahlen keine Interferenzerscheinungen auftreten.

Das Intensitätsprofil des Ausgangsstrahles kann nunmehr in der Bearbeitungs-/ Abbildungsebene in Abhängigkeit der Musterausbildung sehr variabel und spezifisch eingestellt werden, wie nachfolgend dargestellt:
a) eine Musterausprägung ergibt sich dadurch, dass Teilstrahlen zumindest eines ersten und eines weiteren Typs, insbesondere aller Typen, zueinander beabstandet sind, wodurch insbesondere innerhalb der Bearbeitungs-/Abbildungsebene entsprechend gebildete direkt benachbarte Musterfelder zueinander einen unbestrahlten Abstandsbereich aufweisen. Alternativ oder zusätzlich sind Teilstrahlen zumindest des ersten und des Weiteren oder eines anderen Typs, insbesondere aller Typen, direkt angrenzend und/oder überlappend zueinander angeordnet, wodurch insbesondere innerhalb der Bearbeitungs-/Abbildungsebene entsprechend gebildete direkt benachbarter Musterfelder spaltfrei aneinandergrenzen und/oder überlappen.
b) eine andere Musterausprägung zeigt sich dadurch, dass die Teilstrahlen zumindest eines Typs oder mehrerer, insbesondere aller Typen, innerhalb ihrer jeweiligen Matrixanordnung das gleiche Strahlprofil bzw. die gleichen Intensitätswerte, die gleiche Querschnittsgrößen und/oder die gleichen Querschnittsformen aufweisen. Alternativ oder zusätzlich unterscheiden sich Teilstrahlen zumindest eines oder mehrerer, insbesondere aller Typen, in ihrem Strahlprofil bzw. in ihren Intensitätswerten, in ihren Querschnittsgrößen und/oder in ihren Querschnittsformen. So kann die Querschnittform eines Musterfeldes beispielsweise als Kreis, als Rechteck oder Quadrat, als Dreieck, als Raute oder als n-Eck (mit n>5) ausgeformt sein. Grundsätzlich kann hierbei lokal innerhalb der jeweiligen Matrixanordnung der unterschiedlichen Typen auch ein Intensitätswert von Null vorgesehen sein, so dass lokal kein Teilstrahl wirksam ist. Demnach kann somit auch ein regelmäßiges Muster in der Arbeits-/Abbildungsebene mit bestrahlten und unbestrahlten Musterfeldern vorliegen. Je nach Einstellung, welche Musterfelder mit Teil-oder Einzelstrahlen bestrahlt werden oder unbestrahlt belassen werden, kann ein Ausgangsstrahl mit verschiedensten Querschnittsformen in der Arbeits-/Abbildungsebene geformt werden, wobei sich die Querschnittsform aus allen bestrahlten Musterfeldern ergibt.
c) Eine weitere Musterausprägung liegt dadurch vor, dass die Teilstrahlen zumindest eines Typs oder mehrerer, insbesondere aller Typen, innerhalb ihrer jeweiligen Matrixanordnung auf die gleiche Focusebene abbilden. Alternativ oder zusätzlich unterscheiden sich Teilstrahlen zumindest eines oder mehrerer, insbesondere aller Typen, in ihrer Focusebene, in welcher sie jeweils abbilden. Dadurch kann die Musterausbildung auf einen beliebigen Flächenverlauf der Bearbeitungs-/Abbildungsebene angepasst werden.

Es bestehen unterschiedliche Auswahlmöalichkeiten hinsichtlich der zuvor genannten zumindest einen oder der mehreren zu unterscheidenden Lichteigenschaften. Dabei ist in bevorzugter Verfahrensvariante vorgesehen, dass die Teil- oder Einzelstrahlen mittels Strahlformern und/ oder Verzögerungseinheiten und/ oder Wellenlängenmanipulatoren hinsichtlich ihrer Phase und/ oder ihrer Intensitätsprofile und/ oder ihrer Wellenlänge unterschiedlich beeinflusst werden. Damit kann in einem Fall eine Interferenz direkt benachbarter Sub-Teilstrahlen ausgeschlossen werden, da diese bei unterschiedlicher vorgebbarer Verzögerung zeitlich unterschiedlich in der Bearbeitunas-/Abbildunasebene auftreffen, d.h. zeitlich mehr als die Kohärenzlänge der Laserstrahlung oder mehr als die Pulsdauer bei gepulster Strahlung auseinanderliegen, und daher nicht interferieren können. Im anderen Fall kann durch entsprechende Strahlformung und Erzeugung der Einzelstrahlen bzw. Sub-Teilstrahlen erreicht werden, dass Sub-Teilstrahlen eines Teilstrahls weit genug örtlich getrennt auf die Bearbeitunas-/Abbildungsebene projiziert werden, damit diese nicht interferieren können. Weisen direkt benachbarte Intensitätsmaxima eine leicht unterschiedliche Wellenlänge auf, können ebenfalls störende Interferenzen verhindert werden. All diese Verfahrensansätze ergänzen sich somit und bilden in deren Kombination ein ideales Verfahren, die ungewünschten Interferenzen zwischen den benachbarten Beugungsordnungen und den daraus resultierenden Intensitätskontrast (Uniformitätsfehler), wie er eingangs beschrieben wurde, zu vermeiden.

Eine besonders vorteilhafte Verfahrensvariante zur Vermeidung von störenden Specklemustern sieht vor, dass der Laserstrahl in mindestens zwei unterschiedlich polarisierte Teilstrahlen aufgeteilt wird und die Teilstrahlen jeweils mittels Strahlformern hinsichtlich ihrer Intensitätsprofile verändert werden und nach Zusammenführen der unterschiedlich polarisierten Teilstrahlen sich die Intensitätsprofile beider Teilstrahlen in der Bearbeitunas-/ Abbildungsebene zu dem Sollstrahlprofil überlagern, wobei benachbarte Intensitätsmaxima der Intensitätsprofile jeweils eine unterschiedliche Polarisation aufweisen und jeweils einem Teilstrahl zugeordnet sind. Da in diesem Fall die benachbarten Intensitätsmaxima in der Bearbeitunas-bzw. Abbildungsebene unterschiedlich polarisiert sind, können diese nicht miteinander interferieren, so dass der Speckleeffekt deutlich reduziert werden kann und die Laserbearbeitunasaualität erhöht werden kann. Diese vorgeschlagene Ineinander-Schachtelung von zwei Intensitätsverteilungen mit gedrehter Polarisation kann diese ungewollten Intensitätsvariationen bzw. diese Uniformitätsfehler, die sich als Specklemuster störend auswirken, vermeiden und trotzdem diese hochflexible Art der Strahlformung nutzen. In diesem Zusammenhang ist anzumerken, dass auch ein Verfahren denkbar ist, bei dem der Laserstrahl zunächst entsprechend geformt wird und dann anschließend eine Strahlteilung und Polarisationsdrehung vor der Zusammenführung der Teilstrahlen erfolgt.

Eine vorteilhafte Verfahrensvariante sieht dabei vor, dass zudem mittels der Strahlformer in kurzen Zeitabständen die Teilstrahlen hintereinander mit zumindest einer Phasen- und/ oder Amplitudenmasken modifiziert werden, die dieselbe gewünschte Intensitätsverteilung in der Bearbeitungs-/ Abbildungsebene ergeben. Jede dieser Phasen- und/ oder Amplitudenmasken führt dabei zu unterschiedlichen Specklemustern. Werden die unterschiedlichen Phasen- und/ oder Amplitudenmasken mittels des Strahlformers nacheinander angezeigt, so werden die unterschiedlichen Intensitätskontraste bzw. Specklemuster in der Bearbeitungs-/ Abbildungsebene zeitlich, d.h. inkohärent überlagert, wodurch sich eine zeitliche Mittelung ergibt, die zu einer Reduzierung des Intensitätskontrastes bzw. Specklekontrastes führt. Ist der Abstand zwischen den alternierenden Specklemustern kurz genug, kann die Bearbeitungsqualität zusätzlich erhöht werden. Dabei wird vorausgesetzt, dass das verwendete System zur Strahlformung über eine ausreichend hohe Bildwiederholfrequenz zur Darstellung der unterschiedlichen Phasen- und/ oder Amplitudenmasken verfügt.

Dabei ist es von Vorteil, wenn, abhängig von einem Sollstrahlprofil, für die Laserbearbeitung unterschiedliche Phasen- und/ oder Amplitudenmasken vorgegeben werden. Diese können in einer Rechnereinheit für die Laserbearbeitungsanlage abgespeichert sein bzw. je nach Sollstrahlprofil generiert werden.

Eine ebenfalls vorteilhafte Verfahrensvariante sieht dabei vor, dass die Teilstrahlen jeweils für sich getrennt oder gemeinsam mit den Phasen- und/ oder Amplitudenmasken modifiziert werden.

In bevorzugter Verfahrensvariante werden zur Strahlformung diffraktive Diffusoren verwendet, die als Spatial Light Modulatoren (SLM) ausgeführt sind. Eine Strahlformung mittels einer Phasenmodulation kann vorteilhaft mittels einer LCoS-SLM-Einheit (Liquid Crystal on Silicon) erfolgen, bei der mittels eines Arrays von doppelbrechenden Flüssigkristallen die Phase des einfallenden Laserstrahls diskretisiert werden kann, indem jedes Pixel eine unterschiedlich ansteuerbare Winkelausrichtung der Flüssigkristalle aufweist. Hiermit kann eine hochauflösende, schnelle und flexible Änderung der Phase im Rohstrahl ermöglicht und die Änderung der Laserleistungsdichteverteilung in einer Bearbeitungsebene oder Projektionsebene nach einer Fouriertransformation mittels eines Linsensystems angepasst werden. Eine Strahlformung kann grundsätzlich auch mit Hilfe einer Amplitudenmodulation mittels einer DMD-Einheit (Digital Micromirror Device) im Strahlformungsmodul erfolgen. Dabei diskretisiert ein Array von einzeln ansteuerbaren Mikrospiegeln den einfallenden Laserstrahl durch die Aufteilung in viele kleine Teilstrahlen, womit durch die unterschiedliche Ablenkung der Einzelstrahlen die Intensitätsverteilung des Laserstrahls in der Bearbeitungsebene angepasst werden kann. Hierbei wird das einfallende Licht teilweise wieder direkt zurück reflektiert, was bei einer horizontalen Spiegelstellung erfolgt, oder teilweise durch Kippung der Mikrospiegel aus dem Strahlenbündel ausgeschnitten. Allerdings sinkt hiermit die Energieeffizienz, was gegenüber den SLM-Einheiten als Strahlformer einen Nachteil darstellen kann.

Für das erfindungsgemäße Verfahren kann sowohl eine gepulste oder nicht gepulste kohärente Lichtquelle (Laser) verwendet werden, wie sie bei der Lasermaterialbearbeitung verwendet werden.

Bei Verwendung von gepulsten Lasern kann der Laserstrahl nach seiner Aufteilung in mindestens zwei Teil- oder Einzelstrahlen mit unterschiedlichen Intensitätsprofilen für jeden Teilstrahl mittels der Verzögerungseinheiten für jeden Teil- oder Einzelstrahl unterschiedlich zeitlich verzögert werden, so dass nach deren Zusammenführung und Fokussierung auf die Bearbeitungs-/ Abbildungsebene ein Ausgangsstrahl mit einem Intensitätsprofil gebildet wird, ohne sich zumindest zeitlich in der Bearbeitungs-/Abbildungsebene zu überlagern. Dabei kann der Strahlformer zur Erzeugung der unterschiedlichen Intensitätsprofile für jeden Teilstrahl mit dem Strahlteiler kombiniert oder nach den Verzögerungseinheiten vor der Strahlzusammenführung angeordnet sein. Diese Verfahrensvariante kann insbesondere vorteilhaft bei Kurz- oder UltrakurzpulsLasern, z.B. Pico-Sekunden- oder Femto-Sekunden-Lasern (ps- oder fs-Laser), zur Vermeidung von unerwünschten Strahlinterferenzen in der Bearbeitungs-/ Abbildungsebene eingesetzt werden.

Um eine zeitliche Überlagerungen nach der Zusammenführung der Teilstrahlen gänzlich zu vermeiden, wird in bevorzugter Verfahrensvariante die minimale Verzögerung größer oder gleich der Pulsdauer des Laserstrahls gewählt.

In einer bevorzugten Verfahrensvariante wird für den ersten Teilstrahl keine Verzögerung, für den zweiten Teilstrahl eine Verzögerung entsprechend mindestens der Pulsdauer des Laserstrahls, für den dritten Teilstrahl entsprechend mindestens die doppelte Pulsdauer des Laserstrahls und für den n-ten Teilstrahl entsprechend mindestens eine (n-1)-fache Pulsdauer des Laserstrahls gewählt. Damit kann erreicht werden, dass der schnellste und der langsamste Teilstrahl in einem möglichst kurzen Abstand auf der Bearbeitungsebene eintreffen, so dass das gesamte Strahlprofil nur minimal zeitlich verzerrt wird.

Eine weitere Verfahrensvariante sieht vor, dass der Laserstrahl in n Teilstrahlen aufgeteilt wird, wovon mindestens ein Teilstrahl mittels eines Strahlformers hinsichtlich seiner Strahlform variiert und der oder die anderen Teilstrahlen ohne Strahlformung mit dem mindestens einen strahlgeformten Teilstrahl zu einem Bestrahlungsfeld auf dem zu bearbeitenden Werkstück in der Bearbeitungs-/Abbildungsebene zusammengeführt werden oder die anderen Teilstrahlen gezielt zur Interferenz gebracht werden, um unterschiedliche Bestrahlungsaufgaben gleichzeitig zu erledigen. Einerseits kann damit die Erwärmung der Strahlformer-Einheit reduziert werden, da nicht die komplette Laserleistung strahlgeformt werden muss, und andererseits können damit auch unterschiedliche Bestrahlungsaufgaben in einem Schritt durchgeführt werden. So können beispielsweise Laserabtragsprozesse oder durch Laserinterferenz unterstützte Strukturierungsprozesse realisiert werden. Die zuvor beschriebene Vermeidung der Uniformitätsfehler kann auch mit diesem Ansatz gewährleistet sein. Hier sei angemerkt, dass in einer noch nicht veröffentlichten Parallelanmeldung weitere Details zu dieser Verfahrensvariante beschrieben werden.

Eine bevorzugte Verwendung des Verfahrens, wie es zuvor mit seinen Varianten beschrieben wurde, sieht den Einsatz in Laserbearbeitungsanlagen zum Laserabtragen, Laserbohren, Lasermarkieren, Laserlöten bzw. Laserschweißen, Laserschneiden, Lasersintern und Auftragsschweißen, Laserreinigen, Laserhärten, Laserumschmelzen, Laserlegieren und Dispergieren oder zum Laserpolieren vor. Hierbei kommt es auf eine perfekte Strahlqualität mit homogener Strahlformung an. Insbesondere die eingangs beschriebene störende Specklebildung bei der Strahlformung, welche zu Ungenauigkeiten führen kann, kann mit dem vorgestellten Verfahren kompensiert werden.

Die die Vorrichtung betreffende Aufgabe wird dadurch gelöst, dass die Laseranordnung und die Rechnereinheit Einrichtungen zur Durchführung des Verfahrens, wie es zuvor beschrieben wurde, aufweist, und der Laserstrahl mittels mindestens eines Strahlteilers in Teil- oder Einzelstrahlen aufteilbar ist oder jeder Teil- oder Einzelstrahl aus einer Laserquelle mit unterschiedlicher Wellenlänge erzeugbar ist, und mittels Strahlformern und/ oder Verzögerungseinheiten und/ oder Wellenlängenmanipulatoren, welche von der Rechnereinheit ansteuerbar sind, die Teil- oder Einzelstrahlen hinsichtlich ihrer Phase, Polarisation, Wellenlänge und/ oder ihrer Intensitätsprofile unterschiedlich beeinflussbar sind, und dass nach deren Zusammenführung mittels einer Strahlzusammenführung und Fokussierung auf die Bearbeitungs-/ Abbildungsebene einen Ausgangsstrahl mit einem Intensitätsprofil bildbar ist, wobei benachbarte Intensitätsmaxima des Intensitätsprofils sich zum Ausschluss von Interferenzbildungen in ihren Lichteigenschaften unterscheiden. Prinzipiell lassen sich die zuvor beschriebenen Ansätze/ Prinzipien bzw. derartige Laseranordnungen zur Vermeidung der ungewünschten Interferenzerscheinungen zwischen den benachbarten Beugungsordnungen (Polarisation, Wellenlänge, Verzögerung über die Kohärenzlänge oder Pulsdauer hinaus), ggf. zumindest teilweise kombiniert, in bestehende Laserbearbeitungsanlagen integrieren. Ihre Kombination kann in vielen Fällen Vorteile hinsichtlich der Verkleinerung des Bauraums der Vorrichtung, der Erhöhung der Anzahl an Typen von Beugungsordnungen und damit auch der weiteren Reduzierung der Interferenzerscheinungen führen.

Die Erfindung wird im Folgenden anhand eines in den Figuren dargestellten Ausführungsbeispiels näher erläutert. Es zeigen:
Figur 1 in einer schematischen Darstellung ein Diagramm zur Überlagerung von Einzelstrahlprofilen zu einem Sollprofil mittels eines diffraktiven Diffusers,
Figur 2a und 2b in einer schematischen Darstellung den Unterschied zwischen objektiven und subjektiven Speckles,
Figur 3a bis 3b in einer schematischen Darstellung das Prinzip der Erfindung,
Figur 4 in einer schematischen Darstellung eine beispielhafte Verschachtelung von vier unterschiedlich strahlaufgeteilten Profilen zu einem Rechteck-Top-Hat,
Figur 5 in einer schematischen Darstellung eine Laseranordnung zum Bearbeiten von Werkstücken,
Figur 6 in einem weiteren Diagramm die Überlagerung von unterschiedlich polarisierten Teilstrahlprofilen zu einem Sollprofil,
Figur 7 in einer schematischen Darstellung eine Laseranordnung zum Bearbeiten von Werkstücken mittels zwei Laserquellen mit unterschiedlicher Wellenlänge,
Figur 8 in einer weiteren schematischen Darstellung eine alternative Laseranordnung mit Teilstrahlen unterschiedlicher Wellenlänge,
Figur 9 in einer weiteren schematischen Darstellung eine Laseranordnung, bei der der Laserstrahl in unterschiedliche Teilstrahlen und Einzelstrahlen aufgeteilt wird und
Figur 10 in einer weiteren schematischen Darstellung eine Laseranordnung mit einer gepulsten Laserquelle.

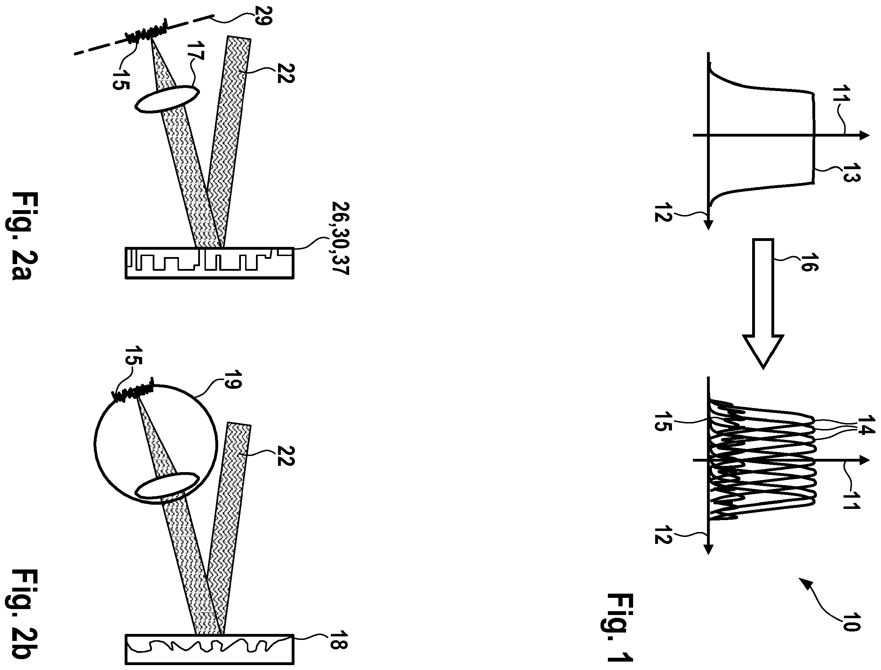

Figur 1 zeigt schematisch in einem Diagramm 10 den eingangs beschriebenen Nachteil bei Verwendung eines diffraktiven Diffusors 16. Die Intensitätsverteilung eines Sollprofils 13, schematisch dargestellt als Verlauf einer Intensität 11 in Abhängigkeit eines Abstands 12, wird mittels des Diffusors 16 durch Überlagerung mehrerer Beugungsordnungen 14 zusammengesetzt. Liegen diese Beugungsordnungen 14 zu nahe beieinander und haben starke Phasenvariation, interferieren diese und es bilden sich ungewünschte Interferenzerscheinungen, die auch Speckles 15 genannt werden. Diese Uniformitätsfehler bzw. Specklemuster stören aufgrund der wechselnden konstruktiven und destruktiven Interferenz die Abbildung des Sollprofils 13.

Abhängig vom verwendeten Abbildungssystem wird in der überwiegend englischsprachigen Literatur zudem zwischen "subjective" und "objective Speckles" unterschieden. Subjektive Speckle entstehen z.B. durch die Betrachtung eines Schirms mit rauer Oberfläche und ändern sich z.B. mit dem Betrachtungswinkel, da die Phasenversätze und die daraus resultierenden Interferenzmuster erst am Schirm (oder auch durch Oberflächen im optischen System) z.B. durch die Oberflächenrauigkeit aufgeprägt werden. Objektive Speckles resultieren aus den Phasensprüngen im diffraktiven optischen Element (DOE) und sind daher durch die Fourier-Transformation der Phasenmaske festgelegt.

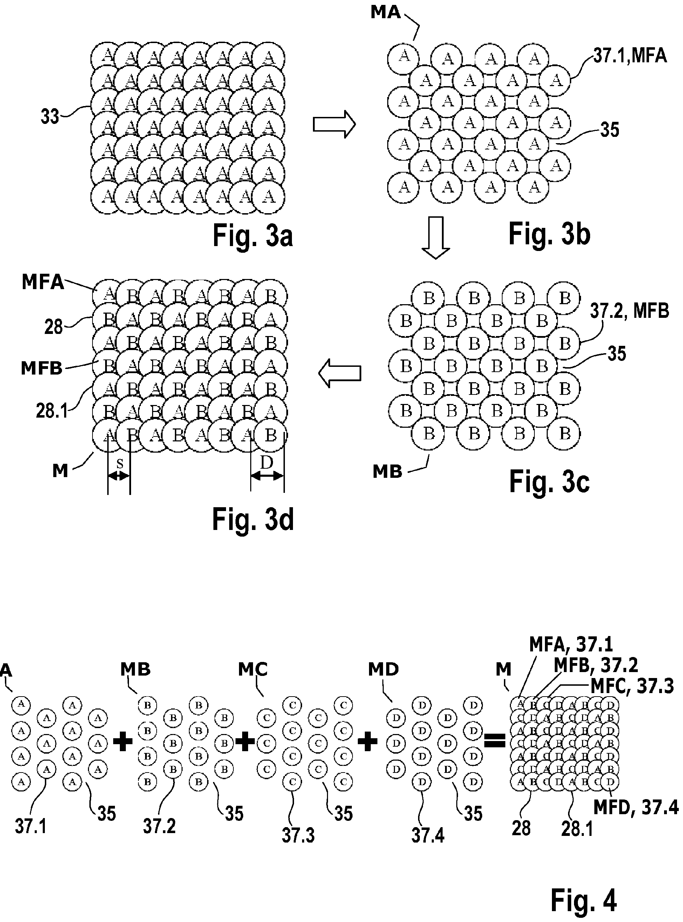

Figur 2a und 2b verdeutlicht schematisch den Unterschied. Objektive Speckles entstehen in der Fokusebene bzw. in der Bearbeitungs-/ Abbildungsebene 29 (siehe Figur 3) nach der gewollten Strahlformung mit einem diffraktiven optischen Element (DOE) oder einem Spatial Light Modulator (SLM) (hier als Strahlformer 26, 30 schematisch dargestellt, siehe Figur 3). D.h. das Interferenzmuster entsteht wegen der verwendeten Art der Strahlformung als Phasenmodulation von kohärenter Strahlung eines Laserstrahls 22. Diese Interferenzmuster entstehen nicht im Auge des Betrachters, sondern sie sind bereits in der Fokusebene bzw. in der Bearbeitungs-/ Abbildungsebene 29 als Speckles 15 vorhanden. Diese objektiven Speckles 15 gilt es gemäß der Aufgabenstellung der Erfindung zu vermeiden.

Im Gegensatz dazu beschreibt Figur 2b schematisch das Entstehen von "subjektiven Speckles" als ein Schimmern an einer mit der kohärenten Strahlung (Laserstrahl 22) beleuchteten diffusen Oberfläche 18. Eine diffuse Oberfläche 18 ist dabei praktisch jede raue Oberfläche. Vor allem ist der Effekt an Oberflächen sichtbar, die eine Rauigkeit in Größenordnung der Wellenlänge der kohärenten Strahlung besitzt. Diese Speckles sind Interferenzen, die aufgrund von Beugung an der Oberfläche 18 entstehen. Allerdings werden diese Speckles 15 erst im Auge 19 des Betrachters oder in einer Kamera sichtbar. In der Abbildungsebene gibt es diese Specklemuster nicht.

Der Kern der Erfindung liegt darin, dass alle Vorteile des diffraktiven Diffusor Algorithmus zur Berechnung der Phasenmasken für die Strahlteilung der kohärenten Strahlung ausgenutzt werden, um damit auch die Strahlformung durchführen zu können, ohne dass ungewünschte Interferenzen zwischen den benachbarten Beugungsordnungen auftreten. Hierbei werden folgende Prinzipien genutzt:
1) Wie oben beschrieben können mithilfe des diffraktiven Diffusor Algorithmus IFTA einfach und genau Phasenmasken für die Strahlteilung berechnet werden.
2) Bei der Strahlformung mit IFTA entstehen die störenden Artefakte / Interferenzen (Speckles) zwischen den sich überlagernden Beugungsordnungen, da das Laserlicht kohärent ist.
3) Zwei örtlich überlappende/ überlagernde Laserstrahlen können nicht interferieren, wenn:
   i. sie unterschiedlicher Polarisation sind
   ii. sie unterschiedlicher Wellenlänge sind
   iii. sie zeitlich mehr als die Kohärenzlänge der Laserstrahlung auseinanderliegen
   iv. sie sich zeitlich nicht überlappen (z.B. bei gepulsten Lasern, wenn ein Puls nicht gleichzeitig mit dem anderen kommt, sondern erst danach).

Die Prinzipien i. bis iv. bilden einen Lösungsraum zur Vermeidung der Ausbildung von ungewünschten Interferenzen zwischen den benachbarten und sich überlappenden Beugungsordnungen, wenn sie mit folgender Idee kombiniert werden, wie dies schematisch in Figur 3a bis 3d dargestellt ist.

Exemplarisch ist in Figur 3a ein Sollstrahlprofil 33 dargestellt (hier ein Rechteck), bei dem sich zwei Beugungsanordnungen überlappen und daher interferieren können, was zu Intensitätsüberhöhungen und -abfällen führt, was sich in den störenden Specklemustern äußert. Die Figuren 3b und 3c zeigen für zwei Typen A und B von Teilstrahlen 35 jeweils die Ausgangsintensitätsprofile für den 1. Teilstrahl 37.1 (Typ A) und den zweiten Teilstrahl 37.2 (Typ B). Das in Figur 3c dargestellte Muster ist dabei zum in Figur 3b dargestellten Muster komplementär. Die Teilstrahlen 35 des Typs A und die Teilstrahlen 35 des Typs B sind jeweils in einer Matrixanordnung MA und MB, bei welcher die Teilstrahlen 35 mit den Intensitätswerten 37.1 bzw. 37.2 auf gedachten Schnittpunkten eines jeweiligen Gitternetzes angeordnet sind. Das Gitternetz kann hierbei beispielsweise orthogonal oder im Winkel zueinander verlaufende Hauptgitterlinien aufweisen. Die einzelnen Teilstrahlen 35 innerhalb einer Matrixanordnung MA, MB eines jeweiligen Typs sind bevorzugt mindestens so weit voneinander beabstandet, dass zwischen diesen Teilstrahlen 35 keine Interferenzerscheinungen auftreten. Figur 3d zeigt das Intensitätsprofil 28.1 für den aus den beiden Teilstrahlen 35 zusammengesetzten Ausgangsstrahl 28, wobei sich die zwei Beugungsordnungen überlappen, aber nicht interferieren können, da die Beugungsordnung "A" und "B" ganz spezifisch unterschiedliche Lichteigenschaften aufweisen. Der Ausgangsstrahl 28 ist gebildet als ein regelmäßiges Muster M aus wiederkehrenden Musterfeldern MFA, MFB, wobei das regelmäßige Muster M aus einer komplementären Verschachtelung der ersten und zweiten Matrixanordnung MA, MB von Teilstrahlen 35 in der Bearbeitungs-/ Abbildungsebene derart ausgebildet ist, dass direkt benachbarte Musterfelder MFA, MFB einem jeweils unterschiedlichen Typ von Teilstrahlen 35 zugeordnet sind. Die Kernidee der Erfindung besteht darin, dass die benachbarten Beugungsordnungen bei der IFTA-basierten Strahlformung gelöscht werden, so dass der IFTA eigentlich eine Phasenmaske zur Strahlteilung berechnen soll (Schritt 1, von Figur 3a zu Figur 3b). Das Bild, das sich aus solcher Berechnung ergeben würde, würde Lücken aufweisen (vergl. Figur 3b, hier als Schachbrett-Muster ausgebildet). Im Schritt 3 müssen diese Lücken wieder geschlossen werden (Figur 3d), und zwar mit einem in Schritt 2 erzeugten komplementären Bild, bestehend aus einzelnen Beugungsordnungen, die mit den ersten Beugungsordnungen nicht interferieren können (nach Prinzipien i.-iv., vergl. Figur 3c).

Figur 3a bis 3d zeigt nur eine schematische Darstellung der Idee, wobei eine Musterausprägung des gebildeten regelmäßigen Musters M sich verschiedenartig gestalten lässt, insbesondere gemäß zumindest einer oder in Kombination mehrerer Variationsmöglichkeiten a) - c), wie sie bereits zuvor im allgemeinen Beschreibungsteil ausgeführt sind. In gleicher oder ähnlicher Weise ist es denkbar, dass nicht nur zwei unterschiedliche Typen der Beugungsordnungen "A" und "B" zu einem gewünschten Strahlprofil zusammengeführt werden, sondern dass noch mehr Beugungsordnungstypen verwendet werden (ferner mit "C", "D" usw. bezeichnet), um den Abstand zwischen den Beugungsordnungen gleichen Typs zu erhöhen und die Interferenzen noch weiter zu minimieren bzw. ganz auszuschließen (Figur 4). Dargestellt sind hier schematisch vier Teilstrahlen 35 die jeweils ein unterschiedliches Ausgangsintensitätsprofil 37.1 ... 37.4 aufweisen und zu einem Ausgangsstrahl 28 mit einem zusammengesetzten Intensitätsprofil 28.1 zusammengeführt werden. Insgesamt ist der Ausgangsstrahl 28 gebildet als ein regelmäßiges Muster M benachbarter Feldmuster MFA, MFB, MFC, MFD, indem vier Matrixanordnungen MA, MB, MC, MD der jeweiligen Teilstrahlen 35 mit den Intensitätsprofilen 37.1, 37.2, 37.3, 37.4 als eine ABCD-Anordnung ineinander verschachtelt sind. Alternativ kann ein Wiederholschema der Musterfelder MFA, MFB, MFC, MFD auch andersartig ausgebildet sein, beispielsweise als eine ABACAD-, eine ABCABD-, eine ABABCABCD-Anordnung oder eine andere Anordnung.

Dieses Beispiel wird im Folgenden noch detaillierter behandelt. In solch einer Anordnung der Beugungsordnungen wie in Bild 3d, Schritt 3 dargestellt, hängt die Uniformität des gewünschten Strahlprofils (rechteckiger Top Hat) von den Abständen zwischen den benachbarten, mit dem strahlteilenden IFTA erzeugten Beugungsordnungen ab. Somit kann der Abstand s zwischen den Beugungsordnungen für die IFTA-Berechnungen aus den Anforderungen an die Uniformität der gewünschten Intensitätsverteilung in der Strahlformung bestimmt und dann mithilfe des IFTA eingestellt werden. Als Beispiel wird bei Top Hats meist eine Strahlprofiluniformität im Bereich von 0%-10% gefordert. Ausgehend von Überschlagsrechnungen und Intensitätsdiagrammen kann festgehalten werden, dass in diesem Fall die Entfernung s zwischen den benachbarten Beugungsordnungen im Bereich von einem halben bis einem ganzen Einzelbeugungsdurchmesser D liegen sollte. Bei programmierbaren diffraktiven Strahlformern (z.B. Liquid Crystal on Silicon Spatial Light Modulatoren LCoS SLM) kann der Abstand s zwischen den benachbarten Beugungsordnungen sehr flexibel eingestellt werden.

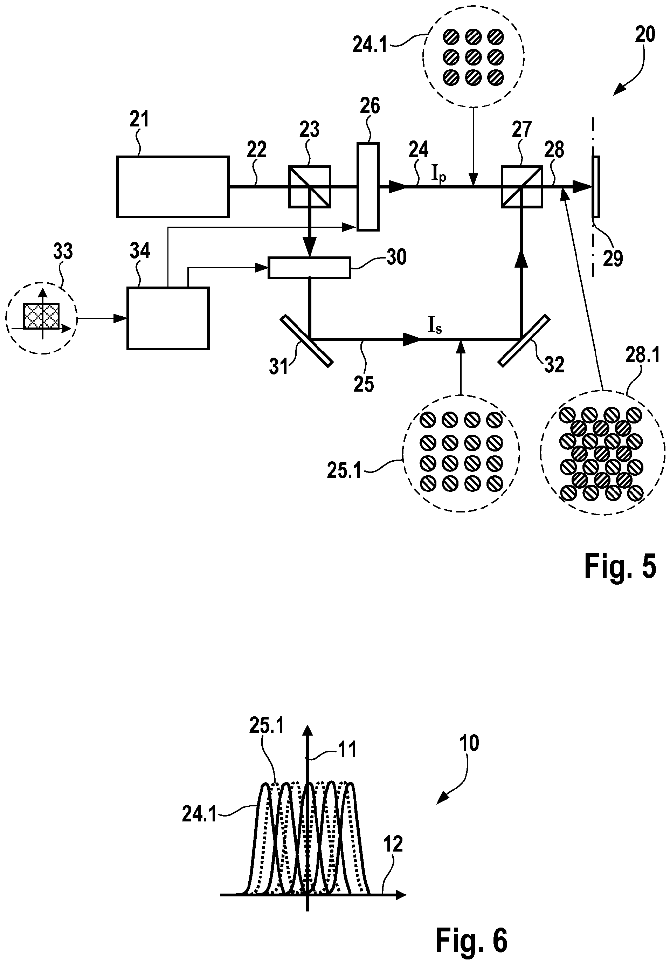

Die Figuren 5 bis 10 zeigen konkrete Laseranordnungen 20 zur technischen Realisierung dieses Konzeptes.

Figur 5 zeigt in einer schematischen Darstellung eine Laseranordnung 20 gemäß der Erfindung zum Bearbeiten von Werkstücken.

Ausgehend von einer Laserquelle 21 wird am Laserstrahl 22 mittels eines Strahlteilers 23 in zwei Strahlengänge, einen p-polarisierten und einen s-polarisierten Teilstrahl 24, 25 aufgeteilt. Dies kann z.B. mithilfe eines Polarisationsstrahlteilers gemacht werden. Die Laserleistung in jedem Strahlengang soll einstellbar sein, z.B. durch eine Polarisationseinstellung der Ausgangsstrahlung. Beim s-polarisierten Teilstrahl 25 handelt es sich um eine Strahlkomponente, die linear senkrecht (Index: s) zur Einfallsebene polarisiert ist. Sie wird in der Literatur auch als transversalelektrische (TE) Komponente bezeichnet. Im anderen Fall, dem p-polarisierten Strahl 24 wird die Amplitude einer in der Einfallsebene linear parallel (Index: p) polarisierten Welle betrachtet. Sie wird in der Literatur auch als transversal magnetische (TM) Komponente bezeichnet.

Aufgabe ist es, ein vorgebbares Sollstrahlprofil 33 (I₀), welches z.B. in einer Rechnereinheit 34 für die Materialbearbeitung abgespeichert ist, ideal auf eine Bearbeitungs-/ Abbildungsebene 29 zu projizieren. Aufgrund von Systemfehlern und Speckles 15 (siehe Figur 1) wird sich allerdings ein abweichendes Strahlprofil ergeben.

Gemäß der Erfindung werden daher die beiden p- und s-polarisierten Teilstrahlen 24, 25 mittels Strahlformer 26, 30 jeweils derart modifiziert, dass sich für jeden Teilstrahl unterschiedliche Intensitätsprofile 24.1 I₍ₚ₎ und 25.1 I₍ₛ₎ ergeben, welche dann anschließend mittels einer Strahlzusammenführung 27 zusammengeführt und als Ausgangsstrahl 28 mit einem gemeinsamen Intensitätsprofil 28.1 I₍ₐ₎ auf die Bearbeitungs-/ Abbildungsebene 29 projiziert werden. Die Intensitätsprofile 24.1 I₍ₚ₎ und 25.1 I₍ₛ₎ werden dabei derart räumlich vorgegeben, dass diese zum einen für sich nicht interferieren und störende Speckles 15 erzeugen können. Zum anderen sind die Intensitätsprofile 24.1 I₍ₚ₎ und 25.1 I₍ₛ₎ derart räumlich vorgegeben, dass der Ausgangsstrahl 28 als Überlagerung in der Bearbeitungs-/ Abbildungsebene 29 ein Intensitätsprofil 28.1 I₍ₐ₎ aufweist, welches dem vorgegebenen Sollstrahlprofil 33 (I₀) idealerweise entspricht und die benachbarten Einzelstrahlen unterschiedlich polarisiert sind. Eine bevorzugte Intensitätsverteilung kann dabei dem eines Schachbrettmusters entsprechen, wobei die weißen Felder des Schachbretts z.B. die Einzelintensitätsverteilungen des p-polarisierten Teilstrahls 24 und die schwarzen Felder der Einzelintensitätsverteilung des s-polarisierten Teilstrahls 25 entsprechen. Da Strahlung mit unterschiedlicher Polarisation nicht interferiert, kann mit dieser Anordnung der Speckleeffekt deutlich reduziert werden. Ebenso denkbar sind auch hexagonale Geometrien in Form eines Wabenmusters.

Die passende Polarisation des ursprünglichen Laserstrahls kann z.B. mithilfe einer Verzögerungsplatte vor dem Strahlteiler eingestellt werden (in der Figur 5 nicht dargestellt). Der Strahlteiler kann als ein Polarisationsstrahlteilerwürfel oder als ein Thin-Film-Polarisator ausgeführt sein.

In einer weiteren Verfahrensvariante ist die bereits erwähnte Kombination dieser Methode, die Überlagerung von unterschiedlich polarisierten Teilstrahlen, sowie die Methode zur zeitlichen Mittelung der Specklemuster hinsichtlich einer weiteren Reduktion der Speckles 15 von Vorteil.

In der Rechnereinheit 34 werden die entsprechenden Intensitätsprofile 24.1 und 25.1 berechnet, so dass eine Ansteuerung der Strahlformer 26, 30 erfolgen kann. Zur Strahlführung dienen u.a. diverse Umlenkspiegel 31, 32 sowie andere optische Systeme, wie Spiegel und/ oder Linsensysteme, welche aber zur Wahrung der Übersichtlichkeit nicht in Figur 5 und in den weiteren Figuren dargestellt sind.

Figur 6 zeigt schematisch in einem Diagramm 10, dargestellt als Verlauf der Intensität 11 in Abhängigkeit des Abstands 12, die Zusammensetzung des Sollprofils 13 aus Figur 1 aus den unterschiedlich polarisierten Teilstrahlen mit ihren Intensitätsprofilen 24.1 I₍ₚ₎ und 25.1 I₍ₛ₎, wobei die Nachbarstrahlen aufgrund ihrer unterschiedlichen Polarisation nicht interferieren, und damit keine störenden Interferenzerscheinungen bzw. Specklemuster erzeugen können.

Bei der Zusammenführung der beiden strahlgeteilten Intensitätsprofile zu einem gemeinsamen Bild muss die Justage mit hoher Genauigkeit erfolgen: z.B. bei 40 µm gro-ßen Einzelspots kann eine Verschiebung der beiden Strahlprofile gegeneinander um wenige Mikrometer zu großer unvorteilhafter Intensitätsvariation führen.

Als eine etwas vereinfachte Alternative zum in Figur 5 dargestellten Aufbau kann ein Aufbau verwendet werden, bei dem nur ein Strahlformer bzw. Strahlteiler verwendet wird, der ein Schachbrettmuster aus einzelnen Beugungsordnungen erzeugt. Dieses Schachbrettmuster wird in zwei Strahlengänge aufgeteilt, wobei die Polarisation der einzelnen Strahlengänge so manipuliert wird, dass die beiden Strahlen bei der anschließenden Zusammenführung nicht mehr interferieren können. Die Zusammenführung passiert versetzt, so dass die einzelnen Beugungsordnungen der beiden Schachbrettmuster ineinandergreifen. Hierbei wird ein Nachteil dieses Aufbaus deutlich: an zwei Seiten des Strahlprofils entstehen Lücken, die für Laserbearbeitungsprozess störend sein können aber nicht unbedingt sein müssen. Ein Vorteil ist die Einsparung eines zweiten Strahlteilers/ Strahlformers und die damit zusammenhängende Reduzierung der Komplexität des Gesamtsystems.

Bekanntlich interferiert kohärente Laserstrahlung unterschiedlicher Wellenlänge nicht, wenn die Wellenlängendifferenz über einige wenige Picometer hinausgeht. Verwendet man nun zwei Laserstrahlen unterschiedlicher Wellenlängen mit ausreichendem spektralen Abstand, die mit zwei diffraktiven Strahlformern (bevorzugt SLM oder DOE) nach dem in Bild 3a bis 3d dargestellten Prinzip strahlgeteilt und in der Bearbeitungsebene wieder zusammengeführt wurden, so überlappen sich die einzelnen Beugungsordnungen desselben Typs örtlich nur gering. Die Überlappung der Beugungsordnungen der unterschiedlichen Typen (A und B) führen gar nicht zu Interferenzen, weil A- und B-Beugungsordnungen unterschiedlicher Wellenlängen sind. Das Kernprinzip der Verschachtelung von Schachmustern der Beugungsordnungen von unterschiedlichen Typen wird hier wie im zuvor beschriebenen Ausführungsbeispiel ebenfalls angewandt. Der Unterschied besteht darin, dass hier nicht die Polarisation, sondern die Wellenlänge der beiden Strahlengänge manipuliert wird.

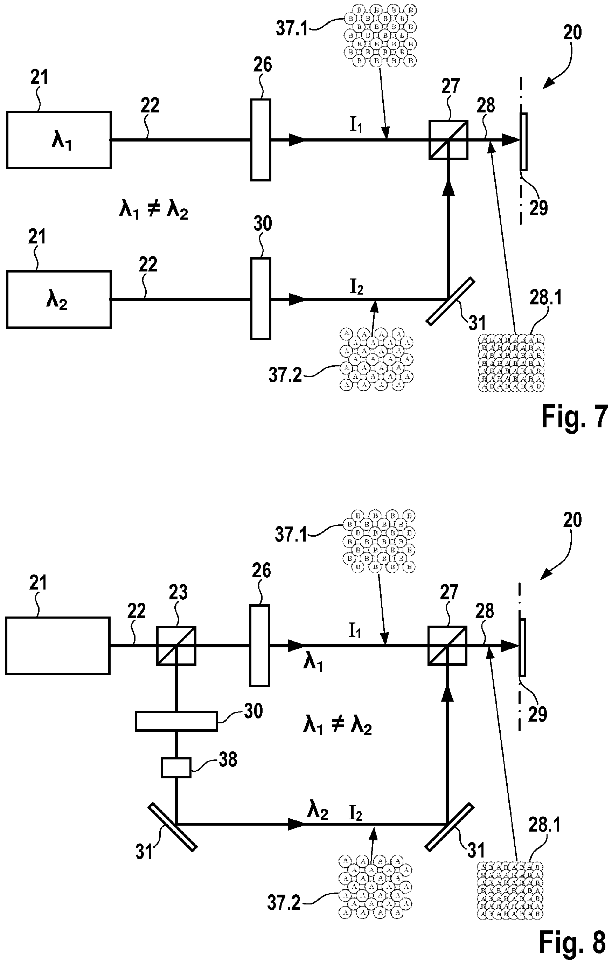

Figur 7 zeigt eine entsprechende Laseranordnung 20 mit zwei Laserquellen 21, welche eine Strahlung von λ₁ und λ₂ emittieren, wobei die beiden Wellenlängen sich nur geringfügig unterscheiden. Der Laserstrahl 22 der ersten Laserquelle 21 wird mit einem ersten Strahlformer 26 geformt. Der Laserstrahl 22 der zweiten Laserquelle 21 wird mit einem zweiten Strahlformer 30 geformt. Die beiden Ausgangsintensitätsprofile 37.1 und 37.2 der beiden Strahlen werden dann mit einer Strahlzusammenführung 27 zu einem Ausgangsstrahl 28 mit einem überlagerten Intensitätsprofil 28.1 zusammengeführt und auf die Bearbeitungs-/ Abbildungsebene 29 fokussiert. Da die direkt benachbarten Einzelbeugungsbilder unterschiedliche Wellenlängen aufweisen, können diese nicht interferieren, womit störende Interferenzen und damit die störenden Specklemuster vermieden werden.

Als Alternative, wie in Figur 8 dargestellt, kann anstatt der zwei Laserquellen 21 (gemäß Figur 7) auch nur eine verwendet werden, wobei dann nach der Aufteilung des Laserstrahls 22 in zwei die Wellenlänge des einen Teilstrahls mittels eines Wellenlängenmanipulators 38 manipuliert wird. Wie konkret die Wellenlänge manipuliert werden kann, ist dabei unerheblich und kann mit allen bekannten Verfahren vollzogen werden. Vorstellbar ist auch eine Ausführung, bei der nur ein Strahlformer zum Einsatz kommt.

Als weitere Alternative ist vorstellbar, mehr als zwei Typen von Beugungsordnungen zu verwenden: Das endgültige Strahlprofil könnte sich aus mehr als zwei Beugungsmustern zusammensetzen (siehe Beugungsmuster A, B, C, D usw., wie in Figur 4 dargestellt). Dafür muss die Wellenlänge in allen Strahlengängen unterschiedlich sein.

Sind die benachbarten Beugungsordnungen nicht mehr kohärent zueinander, so interferieren diese ebenfalls nicht. Dies könnte der Fall sein, wenn ein Aufbau wie in Figur 7 verwendet wird, wobei die Wellenlängen der beiden Laserquellen 21 gleich sein dürfen. Allerdings schon durch die Verwendung von zwei unterschiedlichen Laserquellen 21 sind die beiden Strahlen nicht mehr kohärent zueinander, weswegen ihre Beugungsordnungen nicht interferieren können. Eine Alternative könnte sein, wie in Figur 8 eine Laserquelle zu verwenden, obwohl anstatt eines Wellenlängenmanipulators 38 ein zeitlicher Verzögerer in den zweiten Strahlengang eingebaut wäre. Dieser Verzögerer, oder auch Delay-Line, würde den zweiten Strahl soweit verzögern, bis er nicht mehr mit dem ersten kohärent ist. Die Anforderung an die zeitliche Verzögerung wird aus der Kenntnis der Kohärenzlänge der Strahlquelle gewonnen: Ist die Kohärenzlänge z.B. Xm, so muss auch die räumliche Verzögerung mindestens Xm betragen, oder übertragen in die Zeitdomain: Δt = Xm/c, wobei c die Lichtgeschwindigkeit ist. Bei 50 m wäre eine zeitliche Verzögerung von 1,67*10⁻⁷s notwendig. Die Strahlverzögerung kann z.B. durch die Verlängerung seines optischen Weges geschehen (Aufbau aus mehreren Spiegeln, die den Strahl hin und her reflektieren) oder durch den Einbau eines optisch dichten Mediums, in dem die Lichtgeschwindigkeit geringer ist als im umgebenden Medium (z.B. ein Glasblock).

Als weitere Alternative ist vorstellbar, mehr als zwei Typen von Beugungsordnungen zu verwenden: Das endgültige Strahlprofil könnte sich aus mehr als zwei Beugungsmustern zusammensetzen (Beugungsmuster A, B, C, D usw.), wie in Figur 4 dargestellt. Dafür müssen alle Teilstrahlen um das n-fache der Kohärenzlänge verzögert werden, wobei n die Nummer des jeweiligen Teilstrahls darstellt.

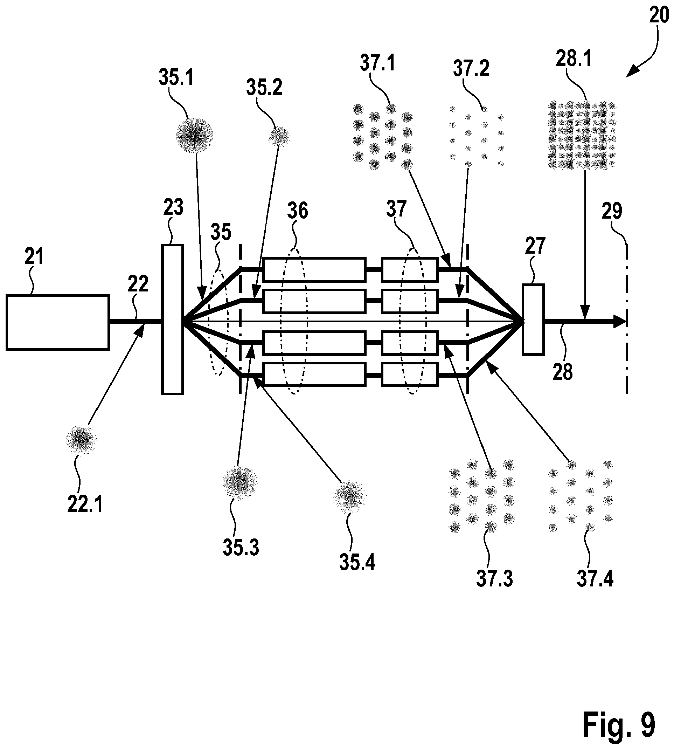

Figur 9 zeigt schematisch eine weitere Laseranordnung 20, bei der, ausgehend von einer Laserquelle 21, welche im gezeigten Beispiel als gepulster Laser ausgeführt ist, der Laserstrahl 22 mit seinem Intensitätsprofil 22.1 mittels eines Strahlteilers 23 in unterschiedlichen Teilstrahlen 35 aufgeteilt wird. Jeder dieser im gezeigten Beispiel vier Teilstrahlen 35 besitzt ein eigenes Intensitätsprofil 35.1... 35.4 und kann mittels Verzögerungseinheiten 36 unterschiedlich verzögert werden. Außerdem wird jeder dieser Teilstrahlen 35 mittels für jeden Teilstrahl eigenem Strahlformer 37 in weitere Sub-Teilstrahlen aufgeteilt, welche jeweils ein Ausgangsintensitätsprofil 37.1 ... 37.4 aufweisen. Die Strahlformer 37 sind beispielsweise als SLM oder DOE ausgeführt und werden, wie die Verzögerungseinheiten 36, von einer hier nicht dargestellten Rechnereinheit 34 angesteuert. Diese letzte Aufteilung ist hinsichtlich der Specklesbildung unproblematisch, da die Sub-Teilstrahlen sich örtlich nicht überlappen. Nun werden die Teilstrahlen 35, welche aus Sub-Teilstrahlen bestehen, mittels der Strahlzusammenführung 27 zusammengesetzt und als Ausgangsstrahl 28 auf die Bearbeitungs-/ Abbildungsebene 29 fokussiert. Jeder Teilstrahl 35 stellt in der Bearbeitungs-/ Abbildungsebene 29 eine Art Pixelfeld dar, wobei die Größe eines Subteilstrahls auch die Auflösungsgrenze des Gesamtbildes darstellt, welches durch ein zusammengesetztes Intensitätsprofil 28.1 des Ausgangsstrahls 28 gebildet ist. Die Sub-Teilstrahlen, die aus unterschiedlichen Teilstrahlen 35 resultieren, können sich örtlich überlappen, ohne zu interferieren, da sie zeitversetzt auftreffen. Diese mehrstufige Aufteilung des Laserstrahls 22 in Teilstrahlen 35 und Sub-Teilstrahlen, die unterschiedlich zeitliche Verzögerung der Teilstrahlen 35 und die Zusammensetzung der Sub-Teilstrahlen zu einem Bild ergeben ein specklefreies Bild.

Die zuvor beschriebenen Verfahrensvarianten bzw. die beschriebenen Vorrichtungsbeispiele funktionieren sowohl mit gepulster als auch mit nicht-gepulster kohärenter Strahlung.

Bei gepulsten Kurz- oder Ultrakurzpulslasern beträgt die Pulsdauer typischerweise einige Mikrosekunden bis einige Femtosekunden. Der zeitliche Abstand zwischen den einzelnen Pulsen ist meist deutlich länger als die Pulslänge selbst. Dieser Umstand kann dazu genutzt werden, Specklemuster bei der Strahlformung zu vermeiden. Ein gepulster Laserstrahl wird in mehrere Strahlen aufgeteilt, wobei jeder von ihnen zu einem Teilstrahlprofil geformt wird. Alle aufgeteilten und geformten Strahlen werden wieder zusammengeführt, wobei die Teilstrahlprofile ein gesamtes Wunschstrahlprofil ergeben. Ist der optische Weg von allen Teilstrahlen gleich, so werden bei örtlicher Überlagerung der Teilstrahlprofile zu einem Gesamtstrahlprofil Interferenzen entstehen. Werden jedoch die Teilstrahlen jeweils unterschiedlich verzögert, so kommt es zu keiner Interferenz bei ihrer örtlichen Überlagerung, da keine zeitliche Überlagerung vorhanden sein wird. Dies setzt voraus, dass die Verzögerung länger als die Pulslänge ist und dass die Teilstrahlen einen Zeitabstand von mindestens der Pulslänge zueinander haben. Dabei soll jedoch versucht werden, den zeitlichen Abstand zwischen dem schnellsten und dem langsamsten Teilstrahlen, die auf die Bearbeitungsebene auftreffen, so gering wie möglich zu halten, um das gesamte Strahlprofil nicht zeitlich zu verzerren.

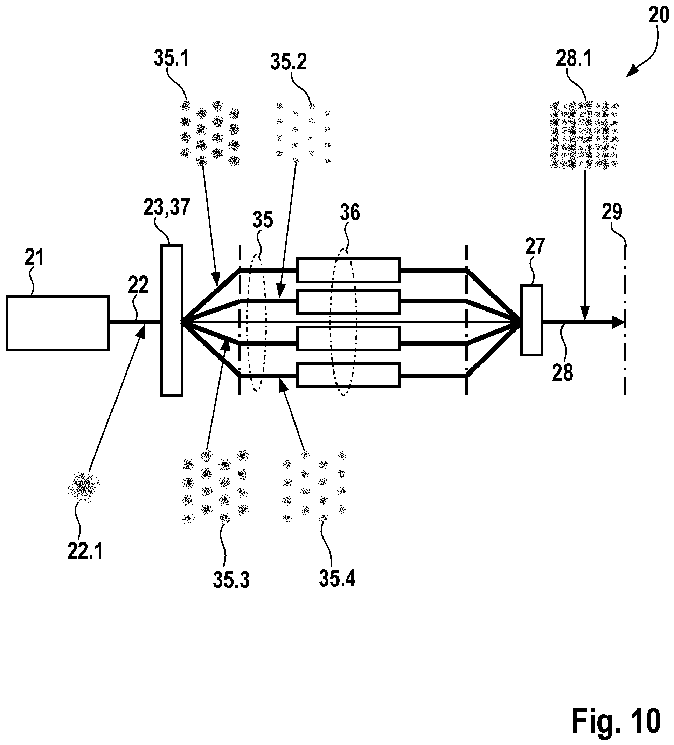

Die Beschreibung des Aufbaus und der Funktionsweise dieser Verfahrensvariante erfolgt mithilfe der in Figur 10 dargestellten Laseranordnung 20. Ein gepulster Laserstrahl 22 wird aus einer Laserquelle 21, welche beispielsweise als Pico-Sekunden- oder Femto-Sekunden-Laser ausgeführt ist, in der Komponente Strahlteiler 23 und Strahlformer 37 in beispielsweise vier Teilstrahlen 35 aufgeteilt. Diese Teilstrahlen werden ihrerseits mit einem Diffusor zu unterschiedlichen Strahlenmustern mit unterschiedlichen Intensitätsprofilen für jeden Teilstrahl 35.1, 35.2, 35.3, 35.4 geformt. Jedes dieser Strahlenmuster ist einzigartig. Wenn man alle einzelnen Strahlmuster in der Bearbeitungs-/ Abbildungsebene 29 mittels einer Strahlzusammenführung 27 zusammenführt, ergibt sich ein Ausgangsstrahl 28 mit einem Gesamtstrahlprofil, welches ein Intensitätsprofil 28.1 in Form z.B. eines Quadrats (also ein quadratischer Top Hat) aufweist. Bis zur Zusammenführung der Teilstrahlen wird jeder der Teilstrahlen 35 mittels Verzögerungseinheiten 36 (Delay-Line) unterschiedlich verzögert. Wie bereits zuvor ausgeführt, soll die minimale Verzögerung größer oder gleich einer Pulsdauer sein. Beträgt zum Beispiel die Pulsdauer 1 ps, so soll Δt₁ = 0 s sein und Δt₂ ≥ 1 ps sein. Die Verzögerung des n-ten Teilstrahls wäre dann Δtₙ = (n-1) * 1 ps. Auf diese Art und Weise können die mit einem Diffusor geformten Strahlenmuster nicht miteinander interferieren, da sie sich örtlich nicht überlappen. Die sich überlappenden Bereiche befinden sich in den jeweils unterschiedlichen Teilstrahlen 35, die wiederum voneinander zeitlich getrennt sind und deshalb nicht interferieren können. Somit wird die Specklebildung in der Bearbeitungsebene 29 verhindert und die Bearbeitungsqualität mit einem geformten Laserstrahl gesichert.

Alternativ kann in einer weiteren, hier nicht dargestellten Verfahrensvariante bzw. Laseranordnung 20 die Strahlformung 37 auch nach den Verzögerungseinheiten 37 und vor der Strahlzusammenführung 27 erfolgen.

Die zuvor beschriebenen Ansätze/ Prinzipien zur Vermeidung der ungewünschten Interferenzerscheinungen zwischen den benachbarten Beugungsordnungen (Polarisation, Wellenlänge, Verzögerung über die Kohärenzlänge oder Pulsdauer hinaus) lassen sich in einer Vorrichtung auch kombinieren. Ihre Kombination kann in vielen Fällen Vorteile hinsichtlich der Verkleinerung des Bauraums der Vorrichtung, der Erhöhung der Anzahl an Typen von Beugungsordnungen und damit auch der weiteren Reduzierung der Interferenzerscheinungen führen.

Das vorgestellte Verfahren kann in Laserbearbeitungsanlagen eingesetzt werden, die mit Strahlformern 26, 30, 37 ausgestattet sind. Die Anwendungsgebiete für das zuvor beschriebene Konzept zur Vermeidung bzw. zeitlichen Mittelung von Specklemustern sind vielfältig. Prinzipiell kann diese Methode bei allen bekannten Laserbearbeitungsprozessen, insbesondere bei der Mikrobearbeitung, eingesetzt werden: Laserschwei-ßen, Laserpolieren, Laserabtragen, Markieren, Bohren, Lasersäubern usw.

## Patentansprüche

1. Verfahren zur Strahlformung bei einem Laserbearbeitungsprozess, bei dem in einer Laseranordnung (20) ein Laserstrahl (22) auf eine Bearbeitungs- / Abbildungsebene (29) fokussiert und der Laserstrahl (22) mittels mindestens eines Strahlformers (26, 30) hinsichtlich seiner Intensitätsverteilung angepasst werden kann, wobei der Laserstrahl (22) zur Vermeidung von Uniformitätsfehlern in der Bearbeitungs-/ Abbildungsebene (29) mittels mindestens eines Strahlteilers (23) in mindestens zwei Teil- oder Einzelstrahlen (24, 25, 35) aufgeteilt wird und die Teil-oder Einzelstrahlen derart unterschiedlich beeinflusst werden oder jeder Teil- oder Einzelstrahl aus einer Laserquelle (21) mit unterschiedlicher Wellenlänge gebildet wird, dass diese nach deren Zusammenführung und Fokussierung auf die Bearbeitungs-/ Abbildungsebene (29) einen Ausgangsstrahl (28) mit einem Intensitätsprofil (28.1) bilden, wobei benachbarte Intensitätsmaxima des Intensitätsprofils (28.1) sich zum Ausschluss von Interferenzbildungen in zumindest einer oder mehreren Lichteigenschaften unterscheiden, **dadurch gekennzeichnet, dass** die Intensitätsprofile (24.1, 25.1, 37.1, 37.2, 37.3, 37.4) der Teil- oder Einzelstrahlen in der Bearbeitungs-/ Abbildungsebene (29) unter Ausbildung des Ausgangsstrahles (28) als regelmäßige Muster M mit wiederkehrenden Musterfeldern (MFA, MFB, MFC, MFD), beispielsweise in Form eines Schachbrettmusters oder eines Wabenmusters oder eines Dreiecksmusters oder eines Rautenmusters oder eines anderen Regelmusters, zusammengeführt werden, wobei direkt benachbarte Musterfelder (MFA, MFB, MFC, MFD) jeweils einem unterschiedlichen Typ von Teil- oder Einzelstrahl zugeordnet ist, wobei sich die unterschiedlichen Typen von Teil- oder Einzelstrahlen in zumindest einer Lichteigenschaft unterscheiden.

2. Verfahren nach Anspruch 1, **dadurch gekennzeichnet, dass** die Teil- oder Einzelstrahlen (24, 25, 35) mittels Strahlformern (26, 30, 37) und/ oder Verzögerungseinheiten (36) und/ oder Wellenlängenmanipulatoren (38) hinsichtlich ihrer Phase und/ oder ihrer Intensitätsprofile (24.1, 25.1, 37.1, 37.2, 37.3, 37.4) und/ oder ihrer Wellenlänge unterschiedlich beeinflusst werden.

3. Verfahren nach Anspruch 1, **dadurch gekennzeichnet, dass** der Laserstrahl (22) in mindestens zwei unterschiedlich polarisierte Teilstrahlen aufgeteilt wird und die Teilstrahlen jeweils mittels Strahlformern (26, 30) hinsichtlich ihrer Intensitätsprofile (24.1, 25.1) verändert werden und nach Zusammenführen der unterschiedlich polarisierten Teilstrahlen sich die Intensitätsprofile (24.1, 25.1) beider Teilstrahlen in der Bearbeitungs-/ Abbildungsebene (29) zu dem Sollstrahlprofil (33) überlagern, wobei benachbarte Intensitätsmaxima der Intensitätsprofile (24.1, 25.1) jeweils eine unterschiedliche Polarisation aufweisen.

4. Verfahren nach einem der Ansprüche 1 bis 3, **dadurch gekennzeichnet, dass** mittels der Strahlformer (26, 30, 37) in kurzen Zeitabständen die Teilstrahlen (24, 25, 37) hintereinander mit zumindest einer Phasen- und/ oder Amplitudenmaske modifiziert werden.

5. Verfahren nach Anspruch 4, **dadurch gekennzeichnet, dass**, abhängig von einem Sollstrahlprofil (33), für die Laserbearbeitung unterschiedliche Phasen- und/ oder Amplitudenmasken vorgegeben werden.

6. Verfahren nach Anspruch 4 oder 5, **dadurch gekennzeichnet, dass** die Teilstrahlen jeweils für sich getrennt oder gemeinsam mit den Phasen- und/ oder Amplitudenmasken modifiziert werden.

7. Verfahren nach einem der Ansprüche 1 bis 6, **dadurch gekennzeichnet, dass** zur Strahlformung diffraktive Diffusoren verwendet werden, die als Spatial Light Modulatoren ausgeführt sind.

8. Verfahren nach einem der Ansprüche 1 bis 7, **dadurch gekennzeichnet, dass** eine gepulste oder nicht gepulste kohärente Lichtquelle verwendet wird.

9. Verfahren nach einem der Ansprüche 1 bis 7, **dadurch gekennzeichnet, dass** bei Verwendung von gepulsten Lasern der Laserstrahl (22) nach seiner Aufteilung in mindestens zwei Teil- oder Einzelstrahlen (24, 25, 35) mit unterschiedlichen Intensitätsprofilen für jeden Teilstrahl (35.1, 35.2, 35.3, 35.4) mittels der Verzögerungseinheiten (36) für jeden Teil- oder Einzelstrahl (24, 25, 35) unterschiedlich zeitlich verzögert werden und nach deren Zusammenführung und Fokussierung auf die Bearbeitungs-/ Abbildungsebene (29) einen Ausgangsstrahl (28) mit einem Intensitätsprofil (28.1) bilden, ohne sich zumindest zeitlich in der Bearbeitungs-/Abbildungsebene (29) zu überlagern, wobei der Strahlformer (37) zur Erzeugung der unterschiedlichen Intensitätsprofile für jeden Teilstrahl (35.1, 35.2, 35.3, 35.4) mit dem Strahlteiler (23) kombiniert oder nach den Verzögerungseinheiten (36) vor der Strahlzusammenführung (27) angeordnet ist.

10. Verfahren nach Anspruch 9, **dadurch gekennzeichnet, dass** die minimale Verzögerung größer oder gleich der Pulsdauer des Laserstrahls (22) gewählt wird.

11. Verfahren nach Anspruch 9 oder 10, **dadurch gekennzeichnet, dass** für den ersten Teilstrahl keine Verzögerung, für den zweiten Teilstrahl eine Verzögerung entsprechend mindestens der Pulsdauer des Laserstrahls (22), für den dritten Teilstrahl entsprechend mindestens die doppelte Pulsdauer des Laserstrahls (22) und für den n-ten Teilstrahl entsprechend mindestens eine (n-1)-fache Pulsdauer des Laserstrahls (22) gewählt wird.

12. Verfahren nach einem der vorstehenden Ansprüche, **dadurch gekennzeichnet, dass** der Laserstrahl (22) in n Teilstrahlen (35) aufgeteilt wird, wovon mindestens ein Teilstrahl mittels eines Strahlformers (26, 30,37) hinsichtlich seiner Strahlform variiert und der oder die anderen Teilstrahlen (35) ohne Strahlformung mit dem mindestens einen strahlgeformten Teilstrahl zu einem Bestrahlungsfeld auf dem zu bearbeitenden Werkstück in der Bearbeitungs-/ Abbildungsebene (29) zusammengeführt werden oder die anderen Teilstrahlen (35) gezielt zur Interferenz gebracht werden.

13. Verwendung des Verfahrens nach einem der Ansprüche 1 bis 12 in Laserbearbeitungsanlagen zum Laserabtragen, Laserbohren, Lasermarkieren, Laserlöten bzw. Laserschweißen, Laserschneiden, Lasersintern und Auftragsschweißen, Laserreinigen, Laserhärten, Laserumschmelzen, Laserlegieren und Dispergieren oder zum Laserpolieren.

14. Vorrichtung, welche eine Laseranordnung (20) zur Materialbearbeitung enthält, wobei die Vorrichtung mindestens eine Rechnereinheit (34), eine Laserquelle (21) und einen Strahlformer (26, 30, 37) umfasst, wobei ein Laserstrahl (22) aus der Laserquelle (21) auf eine Bearbeitungs- / Abbildungsebene (29) fokussierbar und der Laserstrahl (22) mittels des Strahlformers (26, 30, 37) hinsichtlich seiner Intensitätsverteilung anpassbar ist, wobei die Laseranordnung (20) und die Rechnereinheit (34) Einrichtungen zur Durchführung des Verfahrens nach den Ansprüchen 1 bis 13 aufweist, und der Laserstrahl (22) mittels mindestens eines Strahlteilers (23) in Teil- oder Einzelstrahlen (24, 25, 35) aufteilbar ist oder jeder Teil- oder Einzelstrahl (24, 25, 35) aus einer Laserquelle (21) mit unterschiedlicher Wellenlänge erzeugbar ist, und mittels Strahlformern (26, 30, 37) und/ oder Verzögerungseinheiten (36) und/ oder Wellenlängenmanipulatoren (38), welche von der Rechnereinheit (34) ansteuerbar sein können, die Teil- oder Einzelstrahlen hinsichtlich ihrer Phase, Polarisation, Wellenlänge und/ oder ihrer Intensitätsprofile (24.1, 25.1, 37.1, 37.2, 37.3, 37.4) unterschiedlich beeinflussbar sind, und dass nach deren Zusammenführung mittels einer Strahlzusammenführung (27) und Fokussierung auf die Bearbeitungs-/ Abbildungsebene (29) einen Ausgangsstrahl (28) mit einem Intensitätsprofil (28.1) bildbar ist, wobei benachbarte Intensitätsmaxima des Intensitätsprofils (28.1) sich zum Ausschluss von Interferenzbildungen in zumindest einer oder mehreren Lichteigenschaften unterscheiden, **dadurch gekennzeichnet, dass** die Zusammenführung derart ausgebildet ist, dass die Intensitätsprofile (24.1, 25.1, 37.1, 37.2, 37.3, 37.4) der Teil- oder Einzelstrahlen in der Bearbeitungs-/ Abbildungsebene (29) unter Ausbildung des Ausgangsstrahles (28) als regelmäßige Muster M mit wiederkehrenden Musterfeldern (MFA, MFB, MFC, MFD), beispielsweise in Form eines Schachbrettmusters oder eines Wabenmusters oder eines Dreiecksmusters oder eines Rautenmusters oder eines anderen Regelmusters, zusammengeführt werden, wobei direkt benachbarte Musterfelder (MFA, MFB, MFC, MFD) jeweils einem unterschiedlichen Typ von Teil- oder Einzelstrahl zugeordnet ist, wobei sich die unterschiedlichen Typen von Teil- oder Einzelstrahlen in zumindest einer Lichteigenschaft unterscheiden.

## Claims

1. Method for beam shaping in a laser processing process, in which a laser beam (22) in a laser arrangement (20) can be focused at a processing/imaging plane (29) and the laser beam (22) can be adapted with respect to its intensity distribution by means of at least one beam shaper (26, 30), wherein the laser beam (22) is split into at least two partial or individual beams (24, 25, 35) by means of at least one beam splitter (23) in order to avoid uniformity errors in the processing/imaging plane (29) and the partial or individual beams are influenced differently, or each partial or individual beam is formed from a laser source (21) of different wavelength, in a manner such that, after they have been combined and focused at the processing/imaging plane (29), they form an output beam (28) with an intensity profile (28.1), wherein adjacent intensity maxima of the intensity profile (28.1) differ in at least one or a plurality of light properties to exclude the formation of interferences, **characterized in that** the intensity profiles (24.1, 25.1, 37.1, 37.2, 37.3, 37.4) of the partial or individual beams in the processing/imaging plane (29) are combined as regular patterns M with recurring pattern fields (MFA, MFB, MFC, MFD), for example in the form of a chequerboard pattern or a honeycomb pattern or a triangle pattern or a diamond pattern or any other control pattern, to form the output beam (28), wherein directly adjacent pattern fields (MFA, MFB, MFC, MFD) are assigned in each case to a different type of partial or individual beam, wherein the different types of partial or individual beams differ in at least one light property.

2. Method according to Claim 1, **characterized in that** the partial or individual beams (24, 25, 35) are influenced differently with respect to their phase and/or their intensity profiles (24.1, 25.1, 37.1, 37.2, 37.3, 37.4) and/or their wavelength by means of beam shapers (26, 30, 37) and/or retardation units (36) and/or wavelength manipulators (38).

3. Method according to Claim 1, **characterized in that** the laser beam (22) is split into at least two differently polarized partial beams and the partial beams are altered with respect to their intensity profiles (24.1, 25.1) in each case by means of beam shapers (26, 30) and, after the differently polarized partial beams have been combined, the intensity profiles (24.1, 25.1) of both partial beams are superposed in the processing/imaging plane (29) to form the target beam profile (33), wherein adjacent intensity maxima of the intensity profiles (24.1, 25.1) each have a different polarization.

4. Method according to any of Claims 1 to 3, **characterized in that** the beam shapers (26, 30, 37) are used to modify the partial beams (24, 25, 37) with at least one phase and/or amplitude mask successively at short intervals.

5. Method according to Claim 4, **characterized in that** different phase and/or amplitude masks are specified for the laser processing, depending on a target beam profile (33) .

6. Method according to Claim 4 or 5, **characterized in that** the partial beams are modified with the phase and/or amplitude masks in each case separately or together.

7. Method according to any of Claims 1 to 6, **characterized in that** diffractive diffusers, which are designed in the form of spatial light modulators, are used for the beam shaping.

8. Method according to any of Claims 1 to 7, **characterized in that** a pulsed or non-pulsed coherent light source is used.

9. Method according to any of Claims 1 to 7, **characterized in that**, when pulsed lasers are used, laser beam (22), after having been split into at least two partial or individual beams (24, 25, 35) with different intensity profiles for each partial beam (35.1, 35.2, 35.3, 35.4), are temporally retarded by means of the retardation units (36) differently for each partial or individual beam (24, 25, 35) and, after they have been combined and focused at the processing/imaging plane (29), form an output beam (28) with an intensity profile (28.1), without being superposed at least temporally in the processing/imaging plane (29), wherein to produce the different intensity profiles for each partial beam (35.1, 35.2, 35.3, 35.4) the beam shaper (37) is combined with the beam splitter (23) or is arranged downstream of the retardation units (36) upstream of the beam combiner (27) .

10. Method according to Claim 9, **characterized in that** the minimum retardation is selected to be greater than or equal to the pulse duration of the laser beam (22).

11. Method according to Claim 9 or 10, **characterized in that** no retardation is selected for the first partial beam, a retardation corresponding to at least the pulse duration of the laser beam (22) is selected for the second partial beam, accordingly at least twice the pulse duration of the laser beam (22) is selected for the third partial beam, and accordingly at least (n-1) times the pulse duration of the laser beam (22) is selected for the n-th partial beam.

12. Method according to any of the preceding claims, **characterized in that** the laser beam (22) is split into n partial beams (35), of which at least one partial beam is varied with respect to its beam shape by means of a beam shaper (26, 30, 37) and the other partial beam or beams (35) without beam shaping are combined in the processing/imaging plane (29) with the at least one beam-shaped partial beam to form an irradiation field on the workpiece to be processed, or the other partial beams (35) are selectively made to interfere.

13. Use of the method according to any of Claims 1 to 12 in laser processing apparatuses for laser ablation, laser drilling, laser marking, laser soldering or laser welding, laser cutting, laser sintering and deposition welding, laser cleaning, laser hardening, laser remelting, laser alloying and dispersing or for laser polishing.

14. Apparatus containing a laser arrangement (20) for material processing, wherein the apparatus comprises at least a computer unit (34), a laser source (21) and a beam shaper (26, 30, 37), wherein a laser beam (22) from the laser source (21) is focusable at a processing/imaging plane (29) and the laser beam (22) is adaptable with respect to its intensity distribution by means of the beam shaper (26, 30, 37), wherein the laser arrangement (20) and the computer unit (34) have devices for carrying out the method according to Claims 1 to 13, and the laser beam (22) is splittable by means of at least one beam splitter (23) into partial or individual beams (24, 25, 35) or each partial or individual beam (24, 25, 35) is generable from a laser source (21) of different wavelength, and the partial or individual beams are differently influenceable with respect to their phase, polarization, wavelength and/or their intensity profiles (24.1, 25.1, 37.1, 37.2, 37.3, 37.4) by means of beam shapers (26, 30, 37) and/or retardation units (36) and/or wavelength manipulators (38), which can be controllable by the computer unit (34), and in that, after they have been combined by means of a beam combiner (27) and focused at the processing/imaging plane (29), an output beam (28) with an intensity profile (28.1) is formable, wherein adjacent intensity maxima of the intensity profile (28.1) differ in at least one or a plurality of light properties to exclude the formation of interferences, **characterized in that** the combiner is configured such that the intensity profiles (24.1, 25.1, 37.1, 37.2, 37.3, 37.4) of the partial or individual beams in the processing/imaging plane (29) are combined as regular patterns M with recurring pattern fields (MFA, MFB, MFC, MFD), for example in the form of a chequerboard pattern or a honeycomb pattern or a triangle pattern or a diamond pattern or another control pattern, to form the output beam (28), wherein directly adjacent pattern fields (MFA, MFB, MFC, MFD) are assigned in each case to a different type of partial or individual beam, wherein the different types of partial or individual beams differ in at least one light property.

## Revendications

1. Procédé de formation de faisceau lors d'un processus de traitement au laser, avec lequel un faisceau laser (22) est focalisé sur un plan d'usinage/représentation (29) dans un arrangement de laser (20) et le faisceau laser (22) peut être adapté au moyen d'au moins un dispositif de formation de faisceau (26, 30) pour ce qui concerne sa distribution d'intensité, le faisceau laser (22) étant divisé en au moins deux faisceaux partiels ou individuels (24, 25, 35) au moyen d'au moins un séparateur de faisceaux (23) afin d'éviter les erreurs d'uniformité dans le plan d'usinage/représentation (29) et les faisceaux partiels ou individuels étant influencés différemment ou alors chaque faisceau partiel ou individuel issu d'une source laser (21) étant formé avec une longueur d'onde différente de telle sorte que ceux-ci, après leur regroupement et leur focalisation sur le plan d'usinage/représentation (29), forment un faisceau de sortie (28) avec un profil d'intensité (28.1), les maxima d'intensité voisins du profil d'intensité (28.1) se différentiant par au moins une ou plusieurs propriétés lumineuses en vue d'exclure la formation d'interférences, **caractérisé en ce que** les profils d'intensité (24.1, 25.1, 37.1, 37.2, 37.3, 37.4) des faisceaux partiels ou individuels sont regroupés dans le plan d'usinage/représentation (29) en formant le faisceau de sortie (28) sous la forme d'un modèle régulier M avec des champs de modèle périodiques (MFA, MFB, MFC, MFD), par exemple sous la forme d'un modèle en échiquier ou d'un modèle en nid d'abeille ou d'un modèle à triangles ou d'un modèle à losanges ou d'un autre modèle régulé, des champs de modèle (MFA, MFB, MFC, MFD) directement voisins étant respectivement associés à un type différent de faisceau partiel ou individuel, les différents types de faisceaux partiels ou individuels se différentiant par au moins une propriété lumineuse.

2. Procédé selon la revendication 1, **caractérisé en ce que** les faisceaux partiels ou individuels (24, 25, 35) sont influencés différemment au moyen de dispositifs de formation de faisceau (26, 30, 37) et/ou d'unités de retard (36) et/ou de manipulateurs de longueur d'onde (38) pour ce qui concerne leur phase et/ou leur profil d'intensité (24.1, 25.1, 37.1, 37.2, 37.3, 37.4) et/ou leur longueur d'onde.

3. Procédé selon la revendication 1, **caractérisé en ce que** le faisceau laser (22) est divisé en au moins deux faisceaux partiels polarisés différemment et les faisceaux partiels sont respectivement modifiés au moyen de dispositifs de formation de faisceau (26, 30) pour ce qui concerne leurs profils d'intensité (24.1, 25.1) et, après le regroupement des faisceaux partiels polarisés différemment, les profils d'intensité (24.1, 25.1) des deux faisceaux partiels se superposent dans le plan d'usinage/représentation (29) pour former le profil de faisceau voulu (33), les maxima d'intensité voisins des profils d'intensité (24.1, 25.1) présentant respectivement une polarisation différente.

4. Procédé selon l'une des revendications 1 à 3, **caractérisé en ce que** les faisceaux partiels (24, 25, 37) sont modifiés les uns après les autres à de courts intervalles de temps avec au moins un masque de phase et/ou d'amplitude au moyen des dispositifs de formation de faisceau (26, 30, 37).

5. Procédé selon la revendication 4, **caractérisé en ce que** des masques de phase et/ou d'amplitude différents sont prédéfinis pour l'usinage au laser en fonction d'un profil de faisceau voulu (33).

6. Procédé selon la revendication 4 ou 5, **caractérisé en ce que** les faisceaux partiels sont respectivement modifiés avec les masques de phase et/ou d'amplitude séparément pour eux-mêmes ou en commun.

7. Procédé selon l'une des revendications 1 à 6, **caractérisé en ce que** des diffuseurs diffractifs sont utilisés pour la formation de faisceau, lesquels sont réalisés sous la forme de modulateurs spatiaux de lumière.

8. Procédé selon l'une des revendications 1 à 7, **caractérisé en ce qu'**une source de lumière cohérente pulsée ou non pulsée est utilisée.

9. Procédé selon l'une des revendications 1 à 7, **caractérisé en ce que** lors de l'utilisation de lasers pulsés, le faisceau laser (22), après sa division en au moins deux faisceaux partiels ou individuels (24, 25, 35) avec des profils d'intensité différents pour chaque faisceau partiel (35.1, 35.2, 35.3, 35.4), sont retardés dans le temps au moyen des unités de retard (36) différemment pour chaque faisceau partiel ou individuel (24, 25, 35) et, après leur regroupement et leur focalisation sur le plan d'usinage/représentation (29), forment un faisceau de sortie (28) avec un profil d'intensité (28.1) sans se superposer au moins temporellement dans le plan d'usinage/représentation (29), le dispositif de formation de faisceau (37), en vue de générer les profils d'intensité différents pour chaque faisceau partiel (35.1, 35.2, 35.3, 35.4), étant combiné avec le séparateur de faisceaux (23) ou étant disposé après les unités de retard (36) avant le regroupement des faisceaux (27).

10. Procédé selon la revendication 9, **caractérisé en ce que** le retard minimal est choisi égal ou supérieur à la durée d'impulsion du faisceau laser (22).

11. Procédé selon la revendication 9 ou 10, **caractérisé en ce qu'**aucun retard n'est choisi pour le premier faisceau partiel, pour le deuxième faisceau partiel un retard correspondant au moins à la durée d'impulsion du faisceau laser (22) est choisi, pour le troisième faisceau partiel en conséquence au moins le double de la durée d'impulsion du faisceau laser (22) est choisi et pour le n-ième faisceau partiel en conséquence au moins (n-1) fois la durée d'impulsion du faisceau laser (22) est choisi.

12. Procédé selon l'une des revendications précédentes, **caractérisé en ce que** le faisceau laser (22) est divisé en n faisceaux partiels (35), desquels au moins un faisceau partiel est soumis à des variations au moyen d'un dispositif de formation de faisceau (26, 30, 37) pour ce qui concerne sa forme de faisceau et le ou les autres faisceaux partiels (35), sans formation de faisceau, sont regroupés avec l'au moins un faisceau partiel formé en faisceau en un champ d'irradiation sur la pièce ouvrée à usiner dans le plan d'usinage/représentation (29) ou les autres faisceaux partiels (35) sont amenés en interférence de manière ciblée.

13. Utilisation du procédé selon l'une des revendications 1 à 12 dans des équipements d'usinage au laser pour l'enlèvement par laser, le perçage par laser, le marquage par laser, le brasage par laser ou le soudage par laser, la découpe par laser, le frittage par laser et le rechargement par soudure, le nettoyage par laser, la trempe par laser, la refonte par laser, l'alliage par laser et la dispersion ou pour le polissage par laser.

14. Dispositif, lequel contient un arrangement de laser (20) destiné à l'usinage de matériau, le dispositif comportant au moins une unité de calcul (34), une source laser (21) et un dispositif de formation de faisceau (26, 30, 37), un faisceau laser (22) issu de la source laser (21) pouvant être focalisé sur un plan d'usinage/représentation (29) et le faisceau laser (22) pouvant être adapté au moyen du dispositif de formation de faisceau (26, 30, 37) pour ce qui concerne sa distribution d'intensité, l'arrangement de laser (20) et l'unité de calcul (34) possédant des appareils destinés à mettre en œuvre le procédé selon les revendications 1 à 13, et le faisceau laser (22) pouvant être divisé en faisceaux partiels ou individuels (24, 25, 35) au moyen d'au moins un séparateur de faisceaux (23) ou alors chaque faisceau partiel ou individuel (24, 25, 35) issu d'une source laser (21) pouvant être généré avec des longueurs d'onde différentes, et les faisceaux partiels ou individuels, au moyen de dispositifs de formation de faisceau (26, 30, 37) et/ou d'unités de retard (36) et/ou de manipulateurs de longueur d'onde (38), lesquels peuvent être commandés par l'unité de calcul (34), pouvant être influencés différemment pour ce qui concerne leur phase, leur polarisation, leur longueur d'onde et/ou leurs profils d'intensité (24.1, 25.1, 37.1, 37.2, 37.3, 37.4), et en ce qu'après leur regroupement au moyen d'un regroupement de faisceaux (27) et de la focalisation sur le plan d'usinage/représentation (29), un faisceau de sortie (28) avec un profil d'intensité (28.1) peut être formé, les maxima d'intensité voisins du profil d'intensité (28.1) se différentiant par au moins une ou plusieurs propriétés lumineuses en vue d'exclure la formation d'interférences, **caractérisé en ce que** le regroupement est configuré de telle sorte que les profils d'intensité (24.1, 25.1, 37.1, 37.2, 37.3, 37.4) des faisceaux partiels ou individuels sont regroupés dans le plan d'usinage/représentation (29) en formant le faisceau de sortie (28) sous la forme d'un modèle régulier M avec des champs de modèle périodiques (MFA, MFB, MFC, MFD), par exemple sous la forme d'un modèle en échiquier ou d'un modèle en nid d'abeille ou d'un modèle à triangles ou d'un modèle à losanges ou d'un autre modèle régulé, des champs de modèle (MFA, MFB, MFC, MFD) directement voisins étant respectivement associés à un type différent de faisceau partiel ou individuel, les différents types de faisceaux partiels ou individuels se différentiant par au moins une propriété lumineuse.
